(19) Europäisches Patentamt
European Patent Office
Office européen des brevets

(11) **EP 2 801 879 B1**

(12) **EUROPEAN PATENT SPECIFICATION**

(45) Date of publication and mention
of the grant of the patent:
**27.09.2017 Bulletin 2017/39**

(51) Int Cl.:
***G05B 23/02*** *(2006.01)*    ***F03B 13/06*** *(2006.01)*
***G05B 17/02*** *(2006.01)*

(21) Application number: **13166919.4**

(22) Date of filing: **07.05.2013**

(54) **Hydroelectric power plant real-time monitoring system and method**

Wasserkraftwerk-Echtzeitüberwachungssystem und Verfahren

Système et procédé de surveillance en temps réel d'une centrale hydroélectrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.11.2014 Bulletin 2014/46**

(73) Proprietor: **Power Vision Engineering Sarl 1024 Ecublens (CH)**

(72) Inventors:
• **Nicolet, Christophe**
  **1004 Lausanne (CH)**
• **Bollaert, Erik**
  **1009 Pully (CH)**

(74) Representative: **Ganguillet, Cyril et al ABREMA Agence Brevets & Marques Ganguillet Avenue du Théâtre 16 P.O. Box 5027 1002 Lausanne (CH)**

(56) References cited:
**EP-A2- 2 525 087        KR-A- 20010 056 616 US-A1- 2012 072 029**

**Description**

Field of the invention

The present invention relates to a hydroelectric power plant real-time monitoring system and a method thereof. In particular, the real-time monitoring system and method, object of the invention, are configured for effectively monitoring a hydroelectric power plant, which undergoes or is subjected to undergo a transient phenomenon by triggering an alarm identifying a power plant transient behavior problem or by triggering an alarm identifying a power plant transient behavior problem in a preventive manner.

Background of the invention

Traditional monitoring system and method do not allow to effectively monitor in real-time a hydroelectric power plant with the help of a simulation system. In particular, traditional monitoring system and method do not allow to effectively monitor in real-time a hydroelectric power plant, which undergoes a transient phenomenon, by triggering an alarm identifying a power plant transient behavior problem. Moreover, traditional monitoring system and method do not allow to effectively monitor in real-time a hydroelectric power plant, which is subjected to undergo a transient phenomenon, by triggering an alarm identifying a power plant transient behavior problem in a preventive manner.

In traditional hydroelectric power plant monitoring system and method, the monitoring is based on power plant data acquisition and power plant data analysis to identify power plant dysfunction based on the comparison of such data with an initial characterization. The trend of different representative power plant data is therefore observed over time to identify power plant dysfunction, for instance power plant component deterioration, and provide information for maintenance and troubleshooting decision.

Besides, simulation software configured to simulate with the help of a computer the hydroelectric power plant behavior have been developed. Such power plant simulations are traditionally performed off-line and enable, for instance, improved power plant design by assisting engineers in the determination of power plant design parameters. EP 2 525 087 A2 discloses a method for monitoring a wind turbine in real-time to determine whether the system operates within a given specification. Nevertheless and up to now, the above-mentioned simulation software have not been configured and implemented in a hydroelectric power plant real-time monitoring system to simulate in real-time with the help of a computer the transient behavior of a power plant in order to identify power plant transient behavior problem. Indeed, traditional hydroelectric power plant monitoring system and method are not suitable for monitoring in real-time, with the help of a real-time simulation software, the power plant. The ability of simulating in real-time the transient behavior of a power plant in a monitoring system and method is a paramount issue for ensuring the safety of the power plant and of the surrounding natural, human and built environment. Indeed, due to economical questions, for being competitive on the energy market and for adapting the production to the demand in energy, the hydroelectric power plants are increasingly subjected to non-standard exploitation strategies, meaning off design operation, change in control parameters including frequent unit start-up and shutdown. The hydroelectric power plants are also subjected to emergency shutdown, electrical faults such as earth fault, short-circuit, out of phase synchronization and load rejection or acceptance. In such non-standard exploitation strategies, the power plants are undergoes and/or is subjected to undergo transient phenomena, which have to be detected for an effective monitoring of the power plants. Examples of transient phenomena are water hammer, surge tank water level oscillations exceed, pressure exceed, pressure fluctuation due to active component, pressure fluctuation due to passive component, cavitation inception, water flow rate exceed, turbine and/or pump rotational speed exceed, shaft torque exceed, motor-generator voltage and/or current exceed, transformer voltage and/or current exceed and out of phase synchronization. The consequences of such transient phenomena can be dramatic for the power plant equipment, staff, and related natural and built environment.

Moreover, interactions between hydraulic, mechanic and electric components are often the source of power plant transient behavior problem. Therefore, traditional hydroelectric power plant monitoring system and method which don't take into account such interactions are not suitable for effectively detecting such power plant transient behavior problem.

Furthermore, traditional monitoring system and method are configured to compare a measured monitored quantity with a predetermined threshold to trigger, when the monitored quantity exceeds the threshold, an alarm. Nevertheless, the said traditional monitoring system and method is not suitable, as such, for effectively monitoring a hydroelectric power plant. Indeed, the measurement of a monitored quantity in an existing and already built-up hydroelectric power plant is complex or impossible depending on said quantity and/or on said power plant. The vast majority of the hydroelectric power plant components, such as a gallery, a penstock, a blade of turbine and/or of pump, are actually very difficult of access or inaccessible and traditional monitoring system and method are not suitable for triggering alarm identifying a power plant transient behavior problem based on non-measured power plant quantity and/or based on non-measurable power plant quantity. Moreover, the above-mentioned traditional monitoring system and method can be turned out to be ineffective in a complex system such as a hydroelectric power plant because it is possible that the power plant does undergo a dysfunction in a different component of the one where the monitored quantity is actually measured or in the same component but in another position of the one where the monitored quantity is actually measured. For instance, monitoring a pressure at the bottom of a penstock in a hydroelectric power plant does not necessary imply that a power plant transient behavior problem does not occur along the penstock itself and/or along a gallery where measurement are, in the vast majority of cases, impossible. Moreover, the monitoring of a hydroelectric power plant with the help of measuring apparatus is very costly and laborious. The high costs are due to the cost of the measuring apparatus themselves, comprising instruments, sensors and data acquisition system, and to the cost related to the installation of the measuring apparatus in the hydroelectric power plant components. As mentioned above, the vast majority of the hydroelectric power plant components are very difficult of access, which entails high installation costs. The installation of measuring apparatus would also cause to stop the hydroelectric power plant which imply expensive loss of power generation hours. The long term reliability of the measuring apparatus is also a matter of concern. Therefore, there is a need for a monitoring system and method configured to trigger alarm identifying a power plant transient behavior problem and based on a non-measured power plant quantity or of a non-measurable power plant quantity.

Elsewhere, the hydroelectric power plants are, as mentioned above, increasingly subjected to changes in control parameters. Moreover, changes in control parameters resulting from an operating sequence such as an emergency shutdown, a quick shutdown, an untimely valve closure or opening, a unit start-up, a unit loading or unit load rejection are matters of concern from the point of view of transient behavior of the power plant. Indeed, in such changes in control parameters, the hydroelectric power plant is subjected to undergo transient phenomena which could be, depending on said transient phenomena and its magnitude, a matter of concern for the safety of the power plant and/or for the surrounding natural, human and built environment. Nevertheless, traditional hydroelectric power plant monitoring system and method are not configured to trigger an alarm identifying a power plant transient behavior problem in a preventive manner when said power plant would potentially undergo a change in a control parameter from a real value to a virtual value following a variation rate, in particular when said change in a control parameter would result from a power plant operating sequence such as an emergency shutdown, a quick shutdown, an untimely valve closure or opening, a unit start-up, a unit loading and unit load rejection.

Therefore, there is a need for a hydroelectric power plant real-time monitoring system and method thereof fulfilling, respectively avoiding, the above-mentioned requirements and drawbacks. The aim of the present invention is thus to provide a solution to these problems.

Summary of the invention

To this end, in line with the invention, a hydroelectric power plant real-time monitoring system according to claim 1 is proposed. Other possible configurations of the invention are defined in claims 2 to 15.

Moreover, in line with the invention, a hydroelectric power plant real-time monitoring method according to claim 16 is proposed. Other important features of the method are defined in claims 17 to 19.

The invention thus configured provides an effective real-time monitoring system and method of a hydroelectric power plant, which undergoes and/or is subjected to undergo a transient phenomenon. The invention is configured to simulate in real-time a transient behavior of the hydroelectric power plant and to trigger an alarm identifying a power plant transient behavior problem related to the safety of the power plant itself and/or to the safety of the surrounding environment. The invention can also be configured to trigger an alarm identifying a power plant transient behavior problem in a preventive manner.

The transient behavior of the hydroelectric power plant is simulated in real-time with the help of a real-time simulation system comprising a real-time simulation software. Advantageously, the real-time simulation software can be configured to simultaneously model at least one hydraulic component, at least one mechanic component, at least one electric component of the hydroelectric power plant and at least one interaction between said components. Therefore, a transient behavior problem having its source in such interactions can be identified by triggering an alarm. In particular, the real-time monitoring system and method, object of the invention, are configured to trigger an alarm identifying a power plant transient behavior problem in a specific component, for instance in the hydraulic component, but originating from an other component, for instance in the electric component.

A real-time data acquisition system connected to dedicated sensors positioned in a hydroelectric power plant is configured to acquire in real-time real-time measured power plant data, said real-time measured power plant data comprising real-time measured simulation inputs. The real-time simulation system is configured to receive real-time measured simulation inputs from the real-time data acquisition system. Said real-time measured simulation inputs can advantageously comprise power plant boundary conditions so that the real-time simulation system can be synchronized in real-time with the boundary conditions of the power plant, thus cloning the actual power plant operating condition and thus contributing to ensure an effective monitoring of the power plant. Advantageously, the real-time measured simulation inputs can also comprises power plant control parameters.

The monitoring system and method comprise a real-time diagnostic system configured to analyze in real-time at least one monitored quantity and to trigger an alarm identifying a power plant transient behavior problem. In particular, the real-time diagnostic system is configured to compare in real-time a measured monitored quantity with a simulated monitored quantity or a simulated monitored quantity with a predetermined threshold or a measured monitored quantity with a predetermined threshold or any combination thereof. The real-time diagnostic system can also be configured to compute in real-time outputs related to each monitored quantity and compare in real-time said outputs together and/or said outputs with predetermined thresholds.

In a first aspect of the invention, a first alarm identifying a first power plant transient behavior problem can be based on the comparison of a real-time measured monitored quantity with a first real-time simulated monitored quantity, said first real-time simulated monitored quantity corresponding to a simulated quantity of said real-time measured monitored quantity.

Advantageously, a second alarm identifying a second power plant transient behavior problem can be based on the comparison of a second real-time simulated monitored quantity with a predetermined threshold, said second real-time simulated monitored quantity corresponding to a simulated quantity of a non-measured power plant quantity or of a non-measurable power plant quantity. Said second alarm ensures an effective monitoring of a power plant in which measurement of monitored quantity is complex or impossible.

Moreover, a third alarm identifying a third power plant transient behavior problem can advantageously be based on the comparison of a real-time measured monitored quantity with a predetermined threshold.

Elsewhere, a fourth alarm identifying a fourth power plant transient behavior problem in a preventive manner can advantageously be based on the comparison of a preventive simulated monitored quantity with a predetermined threshold. A preventive simulation system is configured to simulate periodically a virtual transient behavior of the hydroelectric power plant from a real value to a predetermined virtual value of power plant control parameter following a predetermined variation rate of said power plant control parameter. Said virtual value of power plant control parameter corresponds therefore to a virtual state of the hydroelectric power plant. Said fourth alarm ensures a preventive monitoring of a power plant which is subjected to undergo a change in a control parameter following a variation rate and therefore subjected to undergo a transient phenomenon. With the help of said fourth alarm, a power plant operator would be warned against a power plant transient behavior problem which would occur when the power plant control parameter are changed from a real value to a virtual value following a variation rate, in particular when said change of control parameters is related to a power plant operating sequence such as an emergency shutdown, a quick shutdown, an untimely valve closure or opening, a unit start-up, a unit loading and unit load rejection. This embodiment allows to periodically check that a transient behavior of the power plant from the real value to the virtual value of power plant control parameter following a variation rate would not jeopardize the safety of the power plant and of the surrounding natural, human and built environment.

In particular embodiments of the invention, the monitoring system and method can comprise components for triggering said first alarm, said second alarm, said third alarm, said fourth alarm and/or any combination thereof.

In a second aspect of the invention, an alarm identifying a power plant transient behavior problem can be based on the comparison of a real-time simulated monitored quantity with a predetermined threshold, said second real-time simulated monitored quantity corresponding to a simulated quantity of a non-measured power plant quantity or of a non-measurable power plant quantity. This alternative ensures an effective monitoring of a power plant in which measurement of monitored quantity is complex or impossible.

In a third aspect of the invention, an alarm identifying a power plant transient behavior problem can be based on the comparison of a preventive simulated monitored quantity with a predetermined threshold. A preventive simulation system is configured to simulate periodically a virtual transient behavior of the hydroelectric power plant from a real value to a predetermined virtual value of power plant control parameter following a predetermined variation rate of said power plant control parameter. Said virtual value of power plant control parameter corresponds therefore to a virtual state of the hydroelectric power plant. Said alarm ensures a preventive monitoring of a power plant which is subjected to undergo a change in a control parameter following a variation rate and therefore subjected to undergo a transient phenomenon. With the help of said alarm, a power plant operator would be warned against a power plant transient behavior problem which would occur when the power plant control parameter are changed from a real value to a virtual value following a variation rate, in particular when said change of control parameters is related to a power plant operating sequence such as an emergency shutdown, a quick shutdown, an untimely valve closure or opening, a unit start-up, a unit loading and unit load rejection. This embodiment allows to periodically check that a transient behavior of the power plant from the real value to the virtual value of power plant control parameter following a variation rate would not jeopardize the safety of the power plant and of the surrounding natural, human and built environment.

Further objects, features and advantages of the invention will become apparent to a person skilled in the art upon reading the specification and appended figures.

Brief description of the drawings

The invention will be better understood with the aid of the description of embodiments given by way of example and illustrated by the figures, in which:

- Figure 1 depicts a layout of a hydroelectric power plant;
- Figure 2 depicts an illustration of a flowchart describing a real-time monitoring system and a real-time monitoring method for the real-time monitoring of a hydroelectric power plant, as optional features to be added to an embodiment of the invention and referred to as first embodiment;
- Figure 3 depicts an illustration of a flowchart describing a real-time monitoring system and a real-time monitoring method for the real-time monitoring of a hydroelectric power plant, as optional features to be added to an embodiment of the invention and referred to as second embodiment;
- Figure 4 depicts an illustration of a flowchart describing a real-time monitoring system and a real-time monitoring method for the real-time monitoring of a hydroelectric power plant, as an embodiment of the claimed invention, called third embodiment;
- Figure 5a depicts a model of an elementary pipe;
- Figure 5b depicts a related equivalent scheme of the elementary pipe of Figure 5a;
- Figure 6 depicts hydraulic components modeling with related equivalent schemes;
- Figure 7 depicts four quadrants characteristics of a pump-turbine;
- Figure 8 depicts an equivalent circuit of a three phase transformer model;
- Figure 9 depicts equivalent circuits of an electrical machine.

Detailed description of the invention

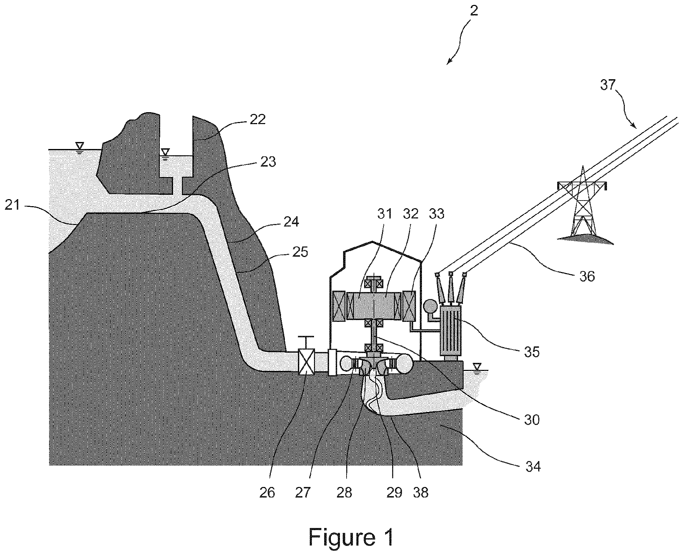

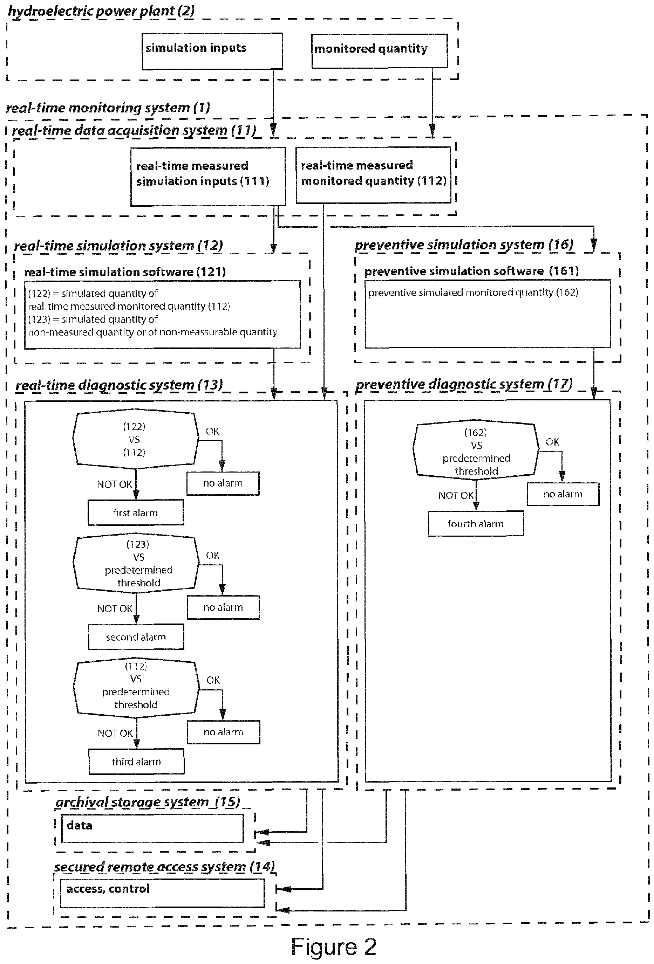

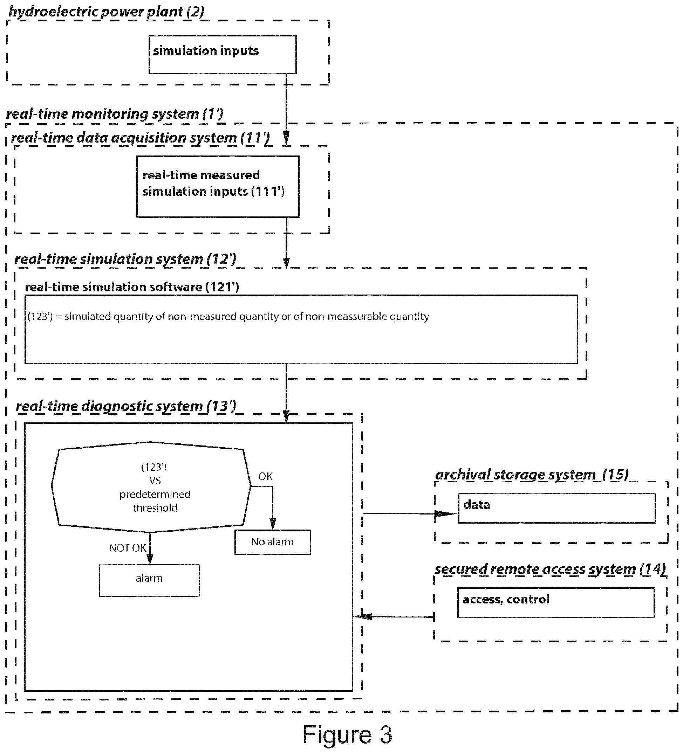

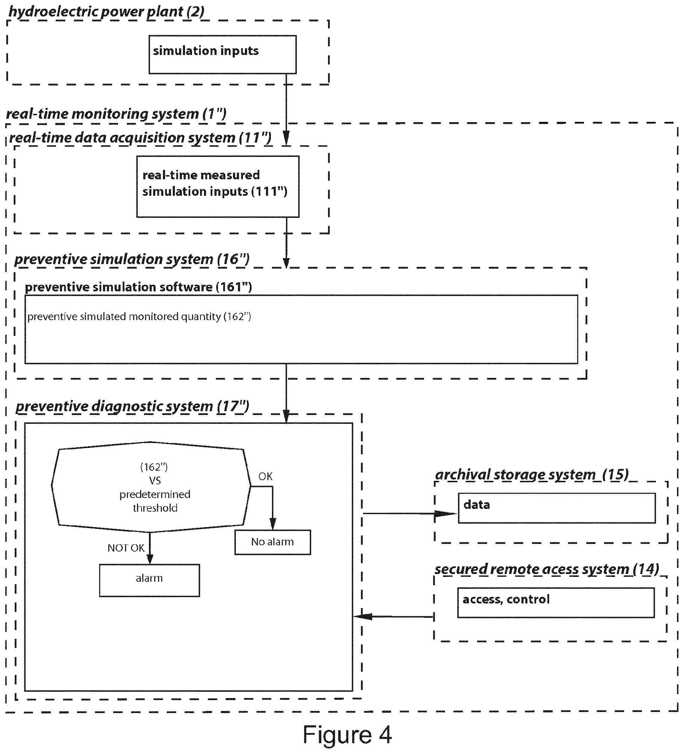

The present invention will now be described more fully hereinafter with reference to the appended Figures 1 to 6, in which embodiments of the invention are shown. The invention may, however, be embodied in many different forms and should not be construed as limited to the embodiments set forth herein. However, the features disclosed in Figure 4 form part of every embodiment according to the claimed invention, whereas Figures 2 and 3 show additional features of particular embodiments. Figure 1 depicts a layout of a hydroelectric power plant. Figure 2, 3 and 4 depict a hydroelectric power plant real-time monitoring system in respectively a first, second and third embodiment. Moreover, Figure 2, 3 and 4 as a flowchart, also depict respectively a first, a second and a third hydroelectric power plant real-time monitoring method, in respectively a first, second and third embodiment. By way of example, the first, second and third embodiments of the hydroelectric power plant real-time monitoring system and method are described below with reference to the layout of the hydroelectric power plant of Figure 1. Nevertheless, the hydroelectric power plant real-time monitoring system and method, object of the invention, are not limited to said hydroelectric power plant layout. Hydraulic, mechanic and/or electric components of said hydroelectric power plant layout can be modified or replaced by other hydraulic, mechanic and/or electric components. Moreover, others hydraulic, mechanic and/or electric components can be added to said hydroelectric power plant layout, such as pumps, Francis turbines, Pelton turbines, Kaplan turbines, Bulb turbines, Propeller turbines, air vessels, surge tanks, pressurized surge tanks, tailrace water tunnel, by-pass discharge valve, motor-generators with fixed or variable speed machine and frequency converters.

In Figure 1, the hydroelectric power plant layout comprises hydraulic components, mechanic components and electric components. The hydraulic components comprise a reservoir 21, a surge tank 22, a gallery 23, a penstock 24, pipes 25, a valve 26, guide vanes 27, blades 28, a turbine and/or a pump 29 and a draft tube 38. The mechanic components comprise turbine inertias, motor-generator inertias, shaft stiffness and shaft damping. The electric components comprise a motor-generator 31 and related excitation system, a transformer 35, a circuit breakers and transmission lines 36. Moreover, the hydroelectric power plant has foundations 34.

In the first embodiment, Figure 2, the real-time monitoring system 1 comprises a real-time data acquisition system 11, a real-time simulation system 12 and a real-time diagnostic system 13. Advantageously, the real-time monitoring system 1 may comprise a preventive simulation system 16 and a preventive diagnostic system 17 as well as an archivage storage system 15 and a secured remote access system 14.

The real-time data acquisition system 11 is connected to dedicated sensors positioned in a hydroelectric power plant and is configured to acquire in real-time real-time measured power plant data, said real-time measured power plant data comprising real-time measured simulation inputs 111 and at least one real-time measured monitored quantity 112. The real-time measured power plant data can be data related to a pressure signal, a water flow rate signal, a water level signal, a vibration signal, an acoustic signal, an acceleration signal, an induction signal, a torque signal, a rotational speed signal, a current signal, a voltage signal and/or a position signal. Such signals are captured with the help of dedicated sensors positioned on the desired power plant component. Said sensors are communicatively connected to the data acquisition system 11.

Advantageously, the real-time measured simulation inputs 111 comprise power plant boundary conditions. Since the real-time simulation system 12 is configured to receive the real-time measured simulation inputs 111 from said real-time data acquisition system 11, the real-time simulation system 12 can be synchronized in real-time with the boundary conditions of the power plant 2. Therefore, the real-time simulation system 12 corresponds to a virtual model of the power plant 2. The real-time simulation system 12 can be considered as a clone, i.e. a duplication, of the power plant 2. The power plant boundary conditions can comprise at least one of the following boundary conditions parameters: a hydraulic boundary conditions parameter, such as a reservoir 21 water level, an electric boundary conditions parameters, such as a power network 37 voltage and/or a power network 37 frequency, or any combination thereof. Advantageously, the real-time measured simulation inputs 111 can comprise power plant control parameters. The power plant control parameters can comprise at least one of the following control parameters: a hydraulic control parameter, such as a guide vane 27 opening and/or a valve 26 opening and/or a blade 28 angle and/or a nozzle vane position, an electric control parameter, such as a motor-generator 31 excitation system voltage and/or a circuit breaker state, or any combination thereof. Furthermore, the real-time measured monitored quantity can comprise at least one of the following component quantities: a hydraulic component quantity, such as a penstock 24 pressure, a pipe (25) pressure and/or a surge tank 22 water level, a mechanic component quantity, such as a motor-generator rotor 32 rotational speed and/or a motor-generator rotor 32 torque, an electric component quantity, such as a motor-generator rotor 32 current and/or a motor-generator rotor 32 voltage, or any combination thereof.

A real-time data acquisition system 11 configured to acquire in real-time real-time measured power plant data can be defined by the following. Physical quantities of the hydroelectric power plant 2, such as real-time measured power plant data comprising real-time measured simulation inputs and real-time measured monitored quantity, are converted with the help of an analog to digital conversion from an analog format to a digital format which is suitable for a computer to handle them. This conversion is done periodically with a given desired sampling frequency. The duration of the acquisition process of one sample should be smaller or equal to the sampling period. Therefore, real-time measured simulation inputs 111 and real-time measured monitored quantity 112 are made available to the other components of the real-time monitoring system 1, in particular respectively to the real-time simulation system 12 and to the real-time diagnostic system 13, with a delay of at most one sampling period. Such a delay is considered acceptable since it is considered negligible in front of the fastness with which the monitoring system has to trigger an alarm. The sampling period have to respect at least the Nyquist-Shannon criterion. In practice however, the sampling period is at least 10 times smaller. Advantageously, the analog to digital conversion is configured so that the digital format is considered continuous by the other components of the real-time monitoring system 1, in particular by the real-time simulation system 12 and by the real-time diagnostic system 13. There is no special requirement on the absolute precision of the clock delivering the timing of the real-time acquisition system 11. Advantageously, the real-time data acquisition system 11 should not be interrupted by any other reason that powering on/off the entire real-time monitoring system 1.

A real-time simulation software 121 is stored in a computer comprised in the real-time simulation system 12, the real-time simulation software 121 being configured to simulate in real-time a transient behavior of the power plant 2 based on the real-time measured simulation inputs 111. Advantageously, the simulation of the transient behavior of the power plant 2 can be provided by simultaneously modeling at least one hydraulic component, at least one mechanic component, at least one electric component of the hydroelectric power plant and at least one interaction between said components. The hydraulic component modeled in the simulation software 121 can comprise at least one of the following hydraulic elements: a reservoir 21, a pipe 25, a valve 26, a surge tank 22, a compensation opening, a turbine and/or a pump 29 or any combination thereof. The mechanic component modeled in the simulation software 121 can comprises at least one of the following mechanic elements: a turbine and/or a pump 29 inertia, a motor-generator 31 inertia, a shaft 30 stiffness, a shaft 31 damping or any combination thereof. The electric component modeled in the simulation software 121 can comprises at least one of the following electric elements: a motor-generator 31, a transformer 35, a circuit breaker, a transmission line 36 or any combination thereof. The real-time simulation system 12 is configured to provide in real-time real-time simulated power plant data related to said transient behavior of the power plant 2. The real-time simulated power plant data comprise at least one first real-time simulated monitored quantity 122. The first real-time simulated monitored quantity 122 corresponds to a simulated quantity of the real-time measured monitored quantity 112. In such a case, the monitoring of the power plant is performed through the analysis of the first real-time simulated monitored quantity 122 and of the real-time measured monitored quantity 112. Elsewhere, a real-time simulation system 12 can be defined by the following. The real-time simulation system 12 should be able to control the time point at which the real-time simulation monitored quantity 122 is delivered. The real-time simulation system 12 comprises a clocking system configured to deliver at a determined time the real-time simulation monitored quantity 122 once made available. Advantageously, the delivery of the real-time simulated monitored quantity 122 should occurs as soon as said quantity 122 has been provided by the real-time simulation system 12 so that the real-time simulation system 12 reproduce a virtual state of the hydroelectric power plant 2. The clocking system is also configured to launch the next simulation step at a determined time. The clocking system can be an internal clock, which means within the computer, or an external clock, in particular synchronous or asynchronous. The minimum time at which the real-time simulation monitored quantity 122 can be delivered is the computation time required to compute said quantity 122. The maximum time is the simulation time step. Advantageously, the real-time simulation monitored quantity 122 should be delivered with a frequency that permits other components of the real-time monitoring system 1, such as real-time diagnostic system 13, to use said quantity as relevant. Advantageously, the delivery of the real-time simulation monitored quantity 122 matches the simulation time step. The simulation time step should respect the Nyquist-Shannon criterion. In this configuration, the real-time simulation system 12 reproduces the real state of the hydroelectric power plant 2. Moreover, one refers to the last section of the chapter "detailed description of the invention" for the modeling details of the simulation of the transient behavior of the power plant 2, in particular for the modeling details of the hydraulic component, the mechanic component, the electric component and their interactions. Advantageously, a validation process of the real-time simulation software 121 is provided off-line and before implementing said software 121 in the real-time simulation system 12. The validation of the hydraulic part of the model consists in reproducing on-site measurements of an event producing significant amplitude to allow for validation. This event is usually an emergency shutdown performed from steady state conditions from 75% to 100% of nominal power of the plant. Then, time evolution of the penstock pressure, draft tube pressure, surge tank water level and unit overspeed are compared and related error margin is evaluated. For the electrical system, the validation can be obtained from sudden no-load three phase short-circuit test performed on site or on a test platform. Then, comparison from field current and armature current enable to evaluate error margin for the electrical system.

The real-time diagnostic system 13 is configured to analyze the monitored quantities, which can be a real-time measured monitored quantity 112 and a real-time simulated monitored quantity 122, and to trigger an alarm identifying a power plant transient behavior problem. The analysis of the monitored quantities can be achieved by comparing in real-time the quantities together and/or by computing in real-time outputs related to monitored quantities and comparing in real-time said outputs. In more details, the real-time diagnostic system 13 is configured to compare in real-time the real-time measured monitored quantity 112 with the first real-time simulated monitored quantity 122 to trigger, in case of deviation above a first predetermined threshold, a first alarm identifying a first power plant transient behavior problem. Such deviation may occur in case of unexpected event occurring on the actual power plant which would consequently not be reproduced by the real-time simulation system. Thus the deviation between the real-time measured monitored quantity and the real-time simulated monitored quantity above a first predetermined threshold would enable to identify occurrence of unexpected events such as untimely guide-vane 27 closing, untimely valve closure, safety valve non-closure in case of emergency procedure, air-valve opening, pipe 25 air introduction, flow obstruction by foreign body or by wall roughness, cavitation inception, water hammer, water column separation, entrapped air, diaphragm cavitation, pipe 25 rupture or buckling, out of phase synchronization, motor-generator 32 short-circuit, pressure fluctuation due to active component, such as turbine and/or pump, pressure fluctuation due to passive component, such as vane 26, and/or any combination thereof. For such unexpected event, said event would be detected as the real-time measured monitored quantity and the real-time simulated monitored quantity would differ in terms of time evolution shape and maximum amplitudes produced by the unexpected event, leading to significant deviations, i.e. significantly above the error margin. Advantageously, the real-time diagnostic system 13 can also be configured to compute in real-time at least one first output related to the real-time measured monitored quantity 112 and at least one second output related to the first real-time simulated monitored quantity 122 and compare in real-time said first output with said second output to trigger, in case of deviation above a second predetermined threshold, a first alarm identifying a first power plant transient behavior problem. Advantageously, the first output and the second output are respectively time-frequency analysis results of the real-time measured monitored quantity 112 and of the first real-time simulated monitored quantity 122. Alternatively, the first output and the second output are respectively envelope analysis results of the real-time measured monitored quantity 112 and of the first real-time simulated monitored quantity 122. Advantageously, the ouputs can be compared in terms of absolute values, relative values, RMS values, amplitudes spectra or phase values, time signal envelop shape and amplitude and/or peak-to-peak signal value. A real-time diagnostic system 13 configured to compare in real-time the above-mentioned quantities or outputs can be defined as follows. The real-time diagnostic system 13 reads quantities, in particular real-time simulated monitored quantity 122 and real-time measured monitored quantity 112, made available by respectively the real-time simulation system 12 and by the real-time data acquisition system 11, with a given sampling period. Advantageously, the real-time diagnostic system 13 is configured to compute in real-time outputs related to monitored quantities 122,112 and to compare in real-time said outputs. Said outputs may advantageously be dependent on previous results of the diagnostic system stored internally. Said outputs are compared in real-time to trigger, in case of deviation above a predetermined threshold, an alarm. Advantageously, the real-time diagnostic system 13 should run the diagnostic process periodically since the digital format of the monitored quantities 122,112 are considered continuous. The time required to process the diagnostic should be smaller or equal to the sampling period of the monitored quantities 122,112.

Advantageously, the real-time monitoring system 1 can comprise a secured remote access system 14 configured to securely and remotely access and control the real-time diagnostic system 13. In particular, the secured remote access system 14 can be configured to control the real-time diagnostic system 13 by controlling the comparison of the real-time measured monitored quantity 112 and the first real-time simulated monitored quantity 122 or the computation and the comparison of the first and second outputs.

Moreover and advantageously, the real-time monitoring system 1 can comprise an archival storage system 15 configured to store the real-time measured power plant data and the real-time simulated power plant data.

With the help of the real-time monitoring system 1 described here above, first alarms identifying different power plant transient behavior problems can be triggered from the deviation between real-time measured monitored quantity 112 and real-time simulated monitored quantity 122 or from the deviation between outputs computed from said quantities. In particular, the monitored quantity can be a hydraulic component quantity, such as a penstock 24 pressure, a pipe (25) pressure and/or a surge tank 22 water level, a mechanic component quantity, such as a motor-generator rotor 32 rotational speed and/or a motor-generator rotor (32) torque, an electric component quantity, such as a motor-generator rotor 32 current and/or a motor-generator rotor 32 voltage, or any combination thereof. The first power plant transient behavior problem can be chosen among untimely guide-vane 27 closing, untimely valve closure, safety valve non-closure in case of emergency procedure, air-valve opening, pipe 25 air introduction, flow obstruction by foreign body or by wall roughness, cavitation inception, water hammer, water column separation, entrapped air, diaphragm cavitation, pipe 25 rupture or buckling, out of phase synchronization, motor-generator 32 short-circuit, pressure fluctuation due to active component, such as turbine and/or pump, pressure fluctuation due to passive component, such as vane 26, and/or any combination thereof.

Advantageously, a second alarm identifying a second power plant transient behavior problem can be triggered by the real-time diagnostic system 13. This particular embodiment ensures an effective monitoring of the power plant 2 in which measurement of monitored quantities is complex or impossible. In this case, the real-time simulation system 12 is configured to provide real-time simulated power plant data comprising at least one second real-time simulated monitored quantity 123. The second real-time simulated monitored quantity 123 corresponds to a simulated quantity of a non-measured power plant quantity or of a non-measurable power plant quantity. The real-time diagnostic system 13 is here configured to compare in real-time the second real-time simulated monitored quantity 123 with a third predetermined threshold to trigger, when the second real-time simulated monitored quantity 123 exceeds the third predetermined threshold, a second alarm identifying a second power plant transient behavior problem. Alternatively, the real-time diagnostic system 13 can be configured to compute in real-time at least one third output related to the second real-time simulated monitored quantity 123 and compare in real-time the third output with a fourth predetermined threshold to trigger, when the third output exceeds the fourth predetermined threshold, a second alarm identifying a second power plant transient behavior problem. The third output can be time-frequency analysis result of the second real-time simulated monitored quantity 123. Alternatively, the third output can be envelope analysis result of the second real-time simulated monitored quantity 123. Moreover, the secured remote access system 14 can be configured to control the real-time diagnostic system 13 by controlling the comparison of the second real-time simulated monitored quantity 123 and the third predetermined threshold or the computation of the third output and the comparison of the third output and the fourth predetermined threshold. With the help of the real-time monitoring system 1 described here above, second alarm identifying different power plant transient behavior problems can be triggered. In particular, the non-measured or the non-measurable power plant quantity can be any pressure along a gallery 23, a pipe 25 and/or along a penstock 24 and the second power plant transient behavior problem can be respectively an exceeding of a minimal or maximal predetermined pressure threshold along the gallery 23, the pipe 25 and/or along the penstock 24. Alternatively, the non-measured or the non-measurable power plant quantity can be a water flow rate in a pipe 25 and the second power plant transient behavior problem can be an exceeding of a maximal predetermined water flow rate threshold in the pipe 25. Alternatively, the non-measured or the non-measurable power plant quantity can be a current and/or voltage of a motor-generator 31 and/or of a transformer 35 and the second power plant transient behavior problem can be respectively an exceeding of a maximal predetermined current and/or voltage threshold of the motor-generator 31 and/or of the transformer 35. Alternatively, the non-measured or non-measurable power plant quantity can be a torque in a shaft 30 and the second power plant transient behavior problem can be an exceeding of a maximal predetermined torque threshold of the shaft 30. Alternatively, the non-measured or the non-measurable power plant quantity can be a torque transmitted in the foundations 34 of the power plant 2 and the second power plant transient behavior problem can be an exceeding of a maximal predetermined torque threshold transmitted in the foundations 34.

Advantageously, a third alarm identifying a third power plant transient behavior problem can be triggered by the real-time diagnostic system 13. In this case, the real-time diagnostic system 13 is configured to compare in real-time the at least one real-time measured monitored quantity 112 with a fifth predetermined threshold to trigger, when the real-time measured monitored quantity 112 exceeds the fifth predetermined threshold, a third alarm identifying a third power plant transient behavior problem. Alternatively, the real-time diagnostic system can also be configured to compute in real-time at least one fourth output related to the real-time measured monitored quantity 112 and compare in real-time the fourth output with a sixth predetermined threshold to trigger, when the fourth output exceeds the sixth predetermined threshold, a third alarm identifying a third power plant transient behavior problem. Similarly to above-mentioned outputs, the fourth output can be time-frequency analysis result of the real-time measured monitored quantity 112. Alternatively, the fourth output can be envelope analysis result of the real-time measured monitored quantity 112. Moreover, the secured remote access system 13 can be configured to control the real-time diagnostic system 13 by controlling the comparison of the real-time measured monitored quantity 112 and the fifth predetermined threshold or the computation of the fourth output and the comparison of the fourth output and the sixth predetermined threshold. With the help of the real-time monitoring system 1 described here above, a third alarm identifying different power plant transient behavior problems can be triggered. In particular, the real-time measured monitored quantity 112 can be a surge tank 22 water level and the third power plant transient behavior problem can be an exceeding of a minimal or maximal predetermined water level threshold in the surge tank 22. Alternatively, the real-time measured monitored quantity 112 can be a pressure at the bottom of a penstock 24 and the third power plant transient behavior problem is an exceeding of a minimal or maximal predetermined pressure threshold at the bottom of the penstock 24. Alternatively, the real-time measured monitored quantity can be a current and/or voltage of a motor-generator rotor 32 and/or stator 33 and the third power plant transient behavior problem can be respectively an exceeding of a maximal predetermined current and/or voltage threshold of said motor-generator rotor 32 and/or stator 33. According to the invention, the real-time monitoring system 1 comprises a preventive simulation system 16 and a preventive diagnostic system 17. The preventive diagnostic system 17 is configured to trigger a fourth alarm identifying a fourth power plant transient behavior problem. Said fourth alarm ensures a preventive monitoring of a power plant which is subjected to undergo a change in a control parameter following a variation rate and therefore subjected to undergo a transient phenomenon. With the help of said fourth alarm, a power plant operator would be warned against a virtual power plant transient behavior problem which would occur when the power plant control parameter are changed from a real value to a virtual value following a variation rate, in particular when said change of control parameter is related to from a power plant operating sequence such as an emergency shutdown, a quick shutdown, an untimely valve closure or opening, a unit start-up, a unit loading and unit load rejection. In particular, the control parameter may correspond to turbine guide vane openings, valve openings, motor-generator excitation system voltage and circuit breaker state. Such an embodiment enables to identify periodically power plant operating sequences which may lead to transient behavior problem according to the particular real operating condition of the power plant. Such transient behaviors cannot be taken into account during off-line transient analysis since it is impossible to foresee and simulate every operating sequence for every operating condition of the power plant. Considering the real operating condition of the power plant, said fourth alarm is triggered when a change of control parameters following a variation rate would lead to a transient behavior problem. In the case that a change of control parameters resulting from a particular operating sequence may be identified as representing a risk for the power plant, countermeasures can be defined by off-line time domain simulations. For this particular feature of the first embodiment, the preventive simulation system 16 is configured to receive the real-time measured simulation inputs 111 from the real-time data acquisition system 11, the real-time measured simulation inputs 111 comprising a real value of at least one power plant control parameter. Moreover, at least one predetermined virtual value of said power plant control parameter and at least one predetermined variation rate of said power plant control parameter are stored in a computer comprised in the preventive simulation system 16. The virtual value of power plant control parameter corresponds to a virtual state of the hydroelectric power plant. The objective is therefore to periodically check that, during operating condition of the power plant 2, a transient behavior of the power plant 2 from the real value to the virtual value of power plant control parameter following said variation rate would not jeopardize the safety of the power plant and of the surrounding natural, human and built environment. At least one preventive simulation software 161 is stored in the computer comprised in the preventive simulation system 16 and is configured to periodically simulate a virtual transient behavior of the power plant 2 from said real value to said virtual value of power plant control parameter following said predetermined variation rate of power plant control parameter. Advantageously, the simulation of the virtual transient behavior of the power plant 2 can be provided by simultaneously modeling at least one hydraulic component, at least one mechanic component, at least one electric component of the hydroelectric power plant and at least one interaction between said components. The hydraulic component modeled in the simulation software 161 can comprise at least one of the following hydraulic elements: a reservoir 21, a pipe 25, a valve 26, a surge tank 22, a compensation opening, a turbine and/or a pump 29 or any combination thereof. The mechanic component modeled in the simulation software 161 can comprises at least one of the following mechanic elements: a turbine and/or a pump 29 inertia, a motor-generator 31 inertia, a shaft 30 stiffness, a shaft 31 damping or any combination thereof. The electric component modeled in the simulation software 161 can comprises at least one of the following electric elements: a motor-generator 31, a transformer 35, a circuit breaker, a transmission line 36 or any combination thereof. Moreover, the preventive simulation system 16 is configured to periodically provide preventive simulated power plant data related to the virtual transient behavior of the power plant 2 comprising at least one preventive simulated monitored quantity 162. Advantageously, the preventive simulation software 161 and the preventive simulation system 16 are respectfully configured to periodically simulate the above-mentioned virtual transient behavior and periodically provide said preventive simulated power plant data according to a predetermined preventive time step. This preventive time step can be chosen in a range between 30 seconds and 10 minutes, preferably chosen in a range between 30 seconds and 2 minutes and most preferably equal to 1 minute. Alternatively, the preventive simulation software 161 and the preventive simulation system 16 are respectfully configured to periodically simulate the above-mentioned virtual transient behavior and periodically provide said preventive simulated power plant data every time that the power plant 2 is changing of operating condition, which means when a power plant control parameter is modified. Since the real value of a power plant control parameter are measured in real-time, such modification of control parameter can be detected by the preventive simulation system 16. The preventive diagnostic system 17 is configured to compare the preventive simulated monitored quantity 162 with a seventh predetermined threshold to trigger, when the preventive simulated monitored quantity 162 exceeds the seventh predetermined threshold, a fourth alarm identifying a fourth power plant transient behavior problem in a preventive manner. Alternatively, the real-time diagnostic system 17 can be configured to compute at least one fifth output related to the preventive simulated monitored quantity 162 and compare the fifth output with a eighth predetermined threshold to trigger, when the fifth output exceeds the eighth predetermined threshold, a fourth alarm identifying a fourth power plant transient behavior problem in a preventive manner. The fifth output can be time-frequency analysis result of the preventive simulated monitored quantity 162. Alternatively, the fifth output can be envelope analysis result of the preventive simulated monitored quantity 162. Moreover, the secured remote access system 14 can be configured to control the preventive diagnostic system 17 by controlling the comparison of the preventive simulated monitored quantity 162 and the seventh predetermined threshold or the computation of the fifth output and the comparison of the fifth output and the eighth predetermined threshold. The secured remote access system 14 can also be configured to control the predetermined preventive time step. The secured remote access system 14 can be configured to control the predetermined virtual value of the power plant control parameter and/or the predetermined variation rate of the power plant control parameter. Advantageously, the real-time measured simulation inputs 111 comprise a real value of each of a plurality of power plant control parameters. A predetermined virtual value of each of said plurality of power plant control parameters and a predetermined variation rate of each of said plurality of power plant control parameters are stored in the computer comprised in said preventive simulation system 16. A plurality of preventive simulation softwares 161 are stored in said computer and are configured to simulate periodically different virtual transient behaviors of the hydroelectric power plant 2, each preventive simulation software 161 simulating periodically a virtual transient behavior from a real value of one of said plurality of power plant control parameters to the corresponding predetermined virtual value of said power plant control parameter following the corresponding predetermined variation rate of said power plant control parameter. The preventive simulation softwares 161 are configured to provide periodically preventive simulated power plant data related to said virtual transient behavior comprising a preventive simulated monitored quantity 162. The preventive diagnostic system 17 can therefore be configured to compare each preventive simulated monitored quantity 162 with a corresponding predetermined threshold to trigger, when one of the preventive simulated monitored quantity 162 exceeds the corresponding predetermined threshold, said fourth alarm. Alternatively, the preventive diagnostic system 17 can be configured to compute an output related to each preventive simulated monitored quantity 162 and compare each output with a corresponding predetermined threshold to trigger, when one of the output exceeds the corresponding predetermined threshold, said fourth alarm. Advantageously, said plurality of preventive simulation software 161 can be configured to simulate simultaneously. With the help of the real-time monitoring system 1 described here above, a fourth alarm identifying different power plant transient behavior problems can be triggered. The change of power plant control parameter from a real value to a virtual value following a variation rate can be related to a power plant operating sequence such as an emergency shutdown, a quick shutdown, an untimely valve closure or opening, a unit start-up, a unit loading and unit load rejection. Said change of control parameter value can be related to a hydraulic control parameter value, such as a guide vane 27 opening and/or a valve 26 opening and/or a blade 28 angle and/or a nozzle vane position, to an electric control parameter value, such as a motor-generator 31 excitation system voltage and/or a circuit breaker state, or to any combination thereof. All above-mentioned control devices are opened or closed in case of emergency shutdown, quick shutdown, or untimely closure or opening according to predetermined safety sequences which time evolution is ensured by mechanical devices such as safety diaphragms placed on the hydraulic command system of the servomotors and actuators of each control device. The closure or opening of the control devices will follow predetermined operating sequence with corresponding closing or opening rate. On the electrical side, opening sequences of control devices, such as circuit-breakers, are also predetermined. Related to the triggering of said fourth alarm, the preventive simulated monitored quantity 162 can advantageously be a surge tank 22 water level and the fourth power plant transient behavior problem can be an exceeding of a minimal or maximal predetermined water level threshold in the surge tank 22. Alternatively, the preventive simulated monitored quantity 162 can be any pressure along a gallery 23 and/or along a penstock 24 and the fourth power plant transient behavior problem can be respectively an exceeding of a minimal or maximal predetermined pressure threshold along the gallery 23 and/or along the penstock 24. Alternatively, the preventive simulated monitored quantity 162 can be a water flow rate in a pipe 25 and the fourth power plant transient behavior problem can be an exceeding of a maximal predetermined water flow rate threshold in the pipe 25. Alternatively, the preventive simulated monitored quantity 162 can be a current and/or voltage of a motor-generator 31 and/or of a transformer 35 and the fourth power plant transient behavior problem can be respectively an exceeding of a maximal predetermined current and/or voltage threshold of the motor-generator 31 and/or of the transformer 35. Alternatively, the preventive simulated monitored quantity 162 can be a turbine and/or pump 29 rotational speed and the fourth power plant transient behavior problem can be an exceeding of a maximal predetermined rotational speed of the turbine and/or pump 29.

Advantageously, the simulation of the virtual transient behavior behaviors of the power plant can be manually adaptable based on past experiences. Moreover, the predetermined virtual values and the predetermined variation rate of control parameter related to potential hazard can be continuously adapted to match as much as possible with real hazard potential. In other words, the system and method, object of the invention, are part of a continuous learning process and may thus be considered as intelligent. Such learning process will be based on power plant event detection experience which will be built during industrial operation of the real-time monitoring system and method enabling to identify new sequences that can represent a risk for the power plant or its environment that should be included or excluded because of new countermeasures in the list of scenarios to be simulated with the virtual model.

In the above-mentioned first embodiment, the monitoring system and method are configured to trigger said first alarm and advantageously said second alarm, said third alarm and/or said fourth alarm. Nevertheless, particular embodiments of the invention can be configured to trigger an alarm chosen among said first alarm, said second alarm, said third alarm, said fourth alarm and/or any combination thereof. Said particular embodiments can be obtained depending of the wish to identify transient behavior problems related to said first, second, third and/or fourth alarms. For instance, the below mentioned second embodiment of the invention is configured to trigger said second alarm. For such embodiment, one can refer to the description of features related to the second alarm of the first embodiment, Figure 2. Similarly, the below mentioned third embodiment of the invention is configured to trigger said fourth alarm. Here again, one can refer to the description of features related to the fourth alarm of the first embodiment, Figure 2.

In the second embodiment, Figure 3, the functions of the real-time data acquisition system 11' and of the real-time diagnostic system 13' differ slightly from the function of the ones 11,13 of the first embodiment. Besides said differences, the same elements as in Figure 2 appear in Figure 3 which means that it is not necessary to describe them in detail again. For such elements, one refers to the description of the first embodiment, Figure 2.

The real-time data acquisition system 11' is connected to dedicated sensors positioned in a hydroelectric power plant 2 and is configured to acquire in real-time real-time measured power plant data, said real-time measured power plant data comprising real-time measured simulation inputs 111'. In this second embodiment, it is not necessary to acquire from the power plant real-time measured monitored quantity. Indeed, the second embodiment ensures an effective monitoring of a power plant in which measurement of monitored quantity is complex or impossible. For other features and advantages of the real-time data acquisition system 11', one refers to the description of the real-time data acquisition system 11 of the first embodiment, Figure 2.

The real-time monitoring system 1' comprises a real-time simulation system 12' configured to provide real-time simulated power plant data, the inputs of the real-time simulation system 12' comprising the real-time power plant measured simulation inputs 111'. Similarly to the first embodiment, the real-time simulation system 12' comprises a real-time simulation software 121' configured to simulate in real-time with the help of a computer the transient behavior of the power plant 2. Advantageously, the simulation of the transient behavior of the power plant 2 can be provided by simultaneously modeling at least one hydraulic component, at least one mechanic component and at least one electric component of the hydroelectric power plant as well as at least one interaction between said components. The hydraulic component modeled in the simulation software 121' can comprise at least one of the following hydraulic elements: a reservoir 21, a pipe 25, a valve 26, a surge tank 22, a compensation opening, a turbine and/or a pump 29 or any combination thereof. The mechanic component modeled in the simulation software 121' can comprises at least one of the following mechanic elements: a turbine and/or a pump 29 inertia, a motor-generator 31 inertia, a shaft 30 stiffness, a shaft 31 damping or any combination thereof. The electric component modeled in the simulation software 121' can comprises at least one of the following electric elements: a motor-generator 31, a transformer 35, a circuit breaker, a transmission line 36 or any combination thereof. The real-time simulated power plant data comprise at least one real-time simulated monitored quantity 123' corresponding to a simulated quantity of a non-measured power plant quantity or of a non-measurable power plant quantity. Advantageously, the delivery of the real-time simulated monitored quantity 123' should occurs as soon as said quantity 123' has been provided by the real-time simulation system 12' so that the real-time simulation system 12' reproduce a virtual state of the hydroelectric power plant 2. For other features and advantages of the real-time simulation system 12', one refers to the description of the real-time simulation system 12 of the first embodiment, Figure 2.

The real-time monitoring system 1' comprises a real-time diagnostic system 13' configured to compare in real-time the real-time simulated monitored quantity 123' with a predetermined threshold to trigger, when said real-time simulated monitored quantity exceeds said predetermined threshold, an alarm identifying a power plant transient behavior problem. Alternatively, the real-time diagnostic system 13' can be configured to compute in real-time at least one sixth output related to the real-time simulated monitored quantity 123' and compare in real-time the sixth output with a predetermined threshold to trigger, when said sixth output exceeds said predetermined threshold, an alarm identifying a power plant transient behavior problem. For instance, said power plant transient behavior problem can be the above-mentioned power plant transient behavior problem identified by the second alarm of the first embodiment. The diagnostic process computation duration should be smaller than the simulation time step of the real-time simulated monitored quantity 123'. For other features and advantages of real-time diagnostic system 13', one refers to the description of the real-time diagnostic system 13 of the first embodiment, Figure 2.

Figure 3, as a flowchart, depicts a hydroelectric power plant real-time monitoring method comprising the following steps:

a) acquiring in real-time from a hydroelectric power plant 2 real-time measured power plant data comprising real-time measured simulation inputs 111',

b) simulating in real-time a transient behavior of the hydroelectric power plant 2 based on said real-time measured simulation inputs 111',

c) providing in real-time real-time simulated power plant data related to said transient behavior of the hydroelectric power plant 2 comprising at least one real-time simulated monitored quantity 123' corresponding to a simulated quantity of a non-measured power plant quantity or of a non-measurable power plant quantity,

d) comparing in real-time said real-time simulated monitored quantity 123' with a predetermined threshold to trigger, when said real-time simulated monitored quantity 123' exceeds said predetermined threshold, an alarm identifying a power plant transient behavior problem

and/or computing in real-time at least one output related to said real-time simulated monitored quantity 123' and comparing in real-time said output with a predetermined threshold to trigger, when said output exceeds said predetermined threshold, an alarm identifying a power plant transient behavior problem.

In the third embodiment, an embodiment according to the invention, Figure 4, the functions of the real-time data acquisition system 11" differs from the function of the one 11 of the first embodiment. Besides said differences, the elements of Figure 2 appear in Figure 4 which means that it is not necessary to describe them in detail again. For such element, one refers to the description of the first embodiment, Figure 2. In particular, for features and advantages of the preventive simulation system 16" and of the preventive diagnostic system 17", one refers respectively to the description of the preventive simulation system 16 and of the preventive diagnostic system 17 of the first embodiment, Figure 2.

The real-time data acquisition system 11" is configured to acquire in real-time from the power plant 2 real-time measured power plant data comprising real-time measured simulation inputs 111" comprising a real value of each of at least one power plant control parameter. In this third embodiment of the invention, it is not necessary to acquire form the power plant real-time measured monitored quantity. Indeed, the third embodiment ensures a preventive monitoring of a power plant which is subjected to undergo a change in a control parameter following a variation rate and therefore subjected to undergo a transient phenomenon. In particular, the control parameter may correspond to turbine guide vane openings, valve openings, motor-generator excitation system voltage and circuit breaker state. The real-time monitoring system 1" comprises a preventive simulation system 16" and a preventive diagnostic system 17". The preventive diagnostic system 17" is configured to trigger an alarm identifying a power plant transient behavior problem. With the help of said alarm, a power plant operator would be warned against a virtual power plant transient behavior problem which would occur when the power plant control parameter are changed from a real value to a virtual value following a variation rate, in particular when said change of control parameters is related to a power plant operating sequence such as an emergency shutdown, a quick shutdown, an untimely valve closure or opening, a unit start-up, a unit loading and unit load rejection. Such an embodiment enables to identify power plant operating sequences which may lead to transient behavior problem according to the particular real operating condition of the power plant. Such transient behaviors cannot be taken into account during off-line transient analysis since it is impossible to foresee and simulate every operating sequence for every operating condition of the power plant. Considering the real operating condition of the power plant, said alarm is triggered when a change of control parameters following a variation rate would lead to a transient behavior problem. In the case that a change of control parameters resulting from a particular operating sequence may be identified as representing a risk for the power plant, countermeasures can be defined by off-line time domain simulations.

Figure 4, as a flowchart, depicts a hydroelectric power plant real-time monitoring method comprising the following steps:

a) acquiring in real-time from a hydroelectric power plant 2 real-time measured power plant data comprising real-time measured simulation inputs 111" comprising a real value of each of at least one power plant control parameter,

b) periodically simulating a virtual transient behavior of the hydroelectric power plant 2 from said real value of power plant control parameter to at least one predetermined virtual value of said power plant control parameter following at least one predetermined variation rate of said power plant control parameter,

c) periodically providing preventive simulated power plant data related to said virtual transient behavior of the hydroelectric power plant 2 comprising at least one preventive simulated monitored quantity 162",

g) comparing said preventive simulated monitored quantity 162" with a predetermined threshold to trigger, when said preventive simulated monitored quantity 162 exceeds said predetermined threshold, an alarm identifying a power plant transient behavior problem in a preventive manner

and/or computing at least one output related to said preventive simulated monitored quantity 162" with comparing in real-time said output with a predetermined threshold to trigger, when said output exceeds said predetermined threshold, a alarm identifying a fourth power plant transient behavior problem in a preventive manner.

The above-mentioned real-time simulation software 121,121" and preventive simulation software 161,161" are configured to simulate with the help of a computer the transient behavior of the power plant 2. Advantageously, the simulation of the transient behavior of the power plant 2 can be provided by simultaneously modeling at least one hydraulic component, at least one mechanic component, at least one electric component of the hydroelectric power plant and at least one interaction between said components. The modeled hydraulic component can comprise at least one of the following hydraulic elements: a reservoir 21, a pipe 25, a valve 26, a surge tank 22, a compensation opening, a turbine and/or a pump 29 or any combination thereof. The modeled mechanic component can comprises at least one of the following mechanic elements: a turbine and/or a pump 29 inertia, a motor-generator 31 inertia, a shaft 30 stiffness, a shaft 31 damping or any combination thereof. The modeled electric component can comprises at least one of the following electric elements: a motor-generator 31, a transformer 35, a circuit breaker, a transmission line 36 or any combination thereof. Said components are modeled with ordinary differential equations (ODE) that all together form the state space equations, see equation (equ.1). This set can be solved for time by numerical solver, with the help of a computer. The precision/complexity of the models can be varied with simulation/solver time step and also with the number of ODE describing the physics. Non-linearities are also taken into account, since the coefficient of the ODE do not have to be constant and can be a function of the state variables and/or time. The global set of equation (equ.1) modeling the entire hydroelectric power plant 2 includes ODE for:

- the hydraulic component comprising the hydraulic machines;
- the mechanic component comprising electrical and hydraulic machines inertias and coupling parameters;
- the electrical component comprising the electrical machines.

The global set of equation is as follows:

$$[A(\bar{x})] \cdot \frac{d\bar{x}}{dt} + [B(\bar{x})] \cdot \bar{x} = \bar{C} \qquad \qquad (equ.1)$$

Where $\bar{x}$ is the state vector, $\bar{C}$ is the control vector, and $[A(\bar{x})]$, $[B(\bar{x})]$ are the system global matrices. The global equation set is solved numerically in time using integration methods such as Runge-Kutta methods in order to compute time evolution of the global system state variables.

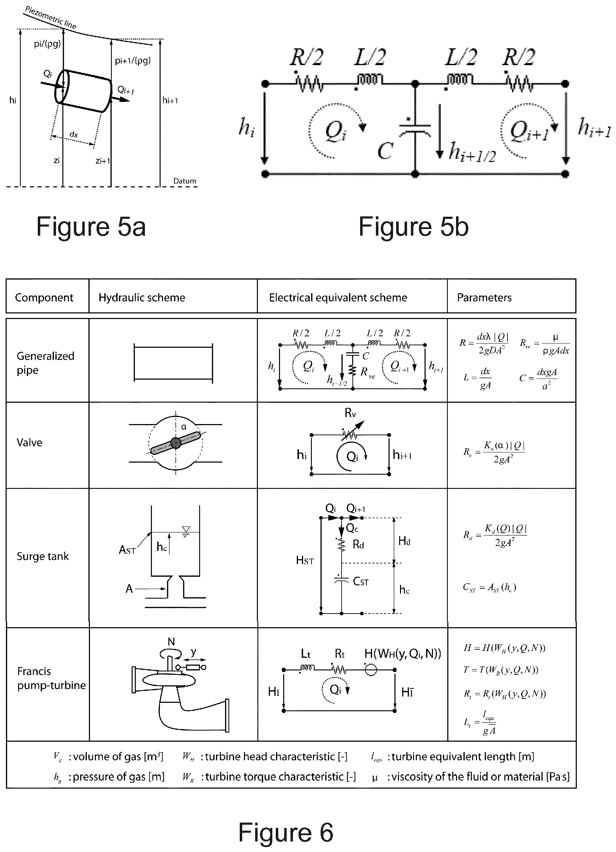

Modeling of the different hydraulic components is based on an electrical analogy. By assuming uniform pressure and velocity distributions in the cross section and neglecting the convective terms, the one-dimensional momentum and continuity balance equations for an elementary pipe filled with water of length dx, cross section A and wave speed a, see Figure 5a, yields to the following set of hyperbolic partial differential equations:

$$\begin{cases} \dfrac{\partial h}{\partial t} + \dfrac{a^2}{gA} \cdot \dfrac{\partial Q}{\partial x} = 0 \\[2mm] \dfrac{\partial h}{\partial x} + \dfrac{1}{gA} \cdot \dfrac{\partial Q}{\partial t} + \dfrac{\lambda |Q|}{2gDA^2} \cdot Q = 0 \end{cases} \qquad (equ.2)$$

The system (equ.2) is solved using the Finite Difference Method with a 1st order centered scheme discretization in space and a scheme of Lax for the discharge variable. This approach leads to a system of ordinary differential equations that can be represented as a T-shaped equivalent scheme, as presented in Figure 5b. The RLC parameters of this equivalent scheme are given by:

$$R = \frac{\lambda \cdot |\bar{Q}| \cdot dx}{2 \cdot g \cdot D \cdot A^2} \qquad L = \frac{dx}{g \cdot A} \qquad C = \frac{g \cdot A \cdot dx}{a^2} \qquad (equ.3)$$

where $\lambda$ is the local loss coefficient. The hydraulic resistance R, the hydraulic inductance L, and the hydraulic capacitance C correspond respectively to energy losses, inertia and storage effects.

The model of a pipe of length L is made of a series of nb elements, Figure 5a, based on the equivalent scheme of Figure 5b. The system of equations relative to this model is set-up using Kirchoff laws and leads to the following ODE set:

$$h_i = \frac{R}{2} \cdot Q_i + \frac{L}{2} \cdot \frac{dQ_i}{dt} + h_{i+1/2}$$

$$C \frac{dh_{i+1/2}}{dt} = Q_i - Q_{i+1} \qquad (equ.4)$$

$$h_{i+1/2} = \frac{R}{2} \cdot Q_{i+1} + \frac{L}{2} \cdot \frac{dQ_{i+1}}{dt} + h_{i+1}$$

The modeling approach based on equivalent schemes of hydraulic components is extended to all the standard hydraulic components such as valve, surge tanks, air vessels, cavitation development, Francis pump-turbines, Pelton turbines (including deflectors and independent injector operation), Kaplan turbines (including double regulation with guide vane opening and runner blade), Bulb turbines, Propeller turbines, and pumps. Figure 6 depicts the model of elementary viscoelastic pipe, valve, surge tank and Francis turbine.

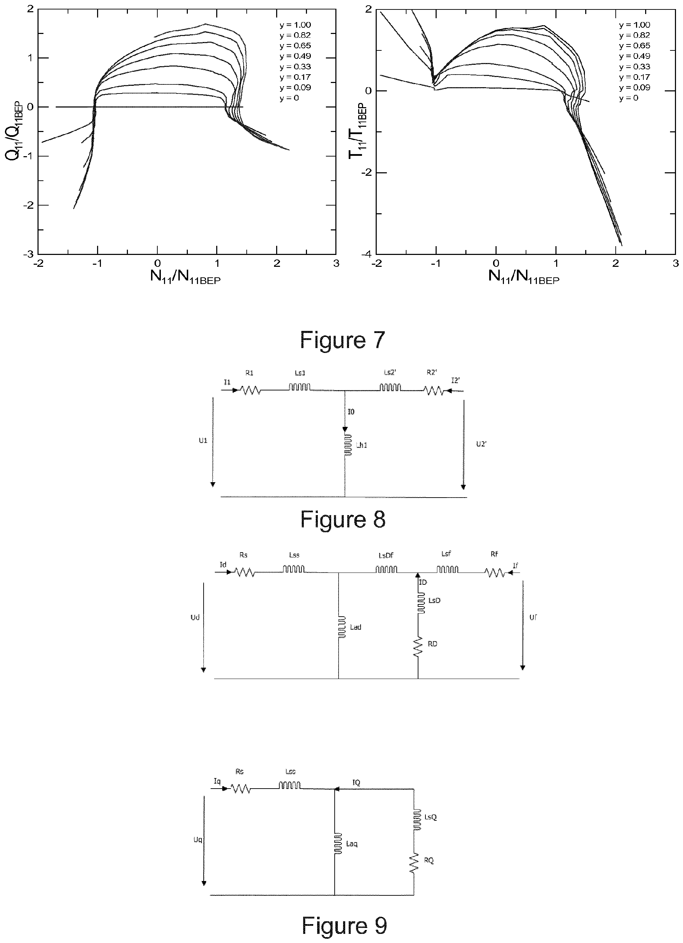

The model of hydraulic machines is based on 4 quadrants characteristics, see Figure 7, defined using dimensional factors N11, Q11 and T11 functions of the rotational speed N, the discharge Q, the torque T, the head H and the reference diameter of the pump-turbine Dref as follows:

$$N_{11} = \frac{N \cdot D_{ref}}{\sqrt{H}} \qquad Q_{11} = \frac{Q}{\sqrt{H} \cdot D_{ref}^{2}} \qquad T_{11} = \frac{T}{H \cdot D_{ref}^{3}} \qquad (equ. 5)$$

The polar Suter representation of the 4 quadrants characteristic is used to handle properly 4 quadrants operation without numerical trouble. The Suter representation leads to WH and WB head and torque coefficients. Thus hydraulic machine net head and torque are deduced from H=H(WH((y,Q,N)) and T=T(WB((y,Q,N)).

The aforementioned hydraulic component modelling enables to take into account the following phenomena:

- head losses;
- water hammer;
- surge tank mass oscillations;
- hydraulic machines 4 quadrant transient operation;
- cavitation ;

The coupling with electrical component is achieved through the angular momentum equation of the rotating train lead to the following equation set:

$$J \frac{d\omega}{dt} = \sum T \qquad (equ.6)$$

Where J is the rotating inertia, w is the angular pulsation, and T are all the torques applying on the considered inertia.

The equation equ.6 is setup for every rotating inertia of the rotating train including motor-generator and hydraulic machine rotating masses and the coupling parameters such as torsional stiffness, torsional damping, all rotating masses inertias, as well as electrical and hydraulic machines torques.

The electromechanical part of the power plant consists in at least one electrical machine (motor-generator) 30,31,32,33, one transformer 35, one grid connection 36,37. The models of those components that are used in the cloning system are complex enough to represent all operating points, even those that are out of the nominal range of the components (short circuit conditions, asymmetry). They are also robust and well describe the transient behavior of the components when going from a stable operating point to another, due to a change of set point or to a default somewhere in the system. Hereafter are shown the ODE systems of the transformer 35 and the electrical machine 30,31,32,33 to show that they are detailed models.

The three phase transformer model is based on the equivalent per phase electrical circuit, referred to primary side, as shown in Figure 8:

- The primary winding's resistance R1 and leakage inductance Ls1
- The secondary winding's resistance R'2 and leakage inductance L's2, reported to the primary side
- A common leg with the main (or magnetizing) inductance Lh1 (Three-phase or single phase, depending on the construction type of the magnetic core)

The ODE corresponding to this circuit are:

$$u_1 = R_1 i_1 + L_{s1}\frac{di_1}{dt} + L_{h1}\frac{di_0}{dt}$$

$$u'_2 = R'_2 i'_2 + L'_{s2}\frac{di'_2}{dt} + L_{h1}\frac{di_0}{dt}$$

The electrical machine model is based on the equivalent direct and quadrature (d and q) axis circuits of a laminated rotor machine. It takes into account the transient and sub-transient characteristic quantities, as shown in Figure 9.
In the direct axis:

- The stator phase windings resistance Rs and leakage inductance Lss
- The stator direct magnetizing inductance Lad
- The rotor field winding's resistance Rr and leakage inductance Lsr
- The damper winding's direct resistance RD and leakage inductance LsD
- Exclusive mutual inductance between excitation circuit and damper winding LsDf

In the quadrature axis;

- Magnetizing inductance in the quadrature - axis Laq
- The damper winding's resistance and leakage inductance rQ and LsQ
- The ODE corresponding to this circuit are:

$$u_d = R_s i_d + L_{ss}\frac{di_d}{dt} + L_{ad}\frac{di_f}{dt} + L_{ad}\frac{di_D}{dt} - \omega_m L_{ss} i_q - \omega_m L_{aq} i_Q$$

$$u_q = R_s i_q + L_{ss}\frac{di_q}{dt} + L_{aq}\frac{di_Q}{dt} + \omega_m L_{ss} i_d + \omega_m L_{ad} i_f + \omega_m L_{aq} i_D$$

$$u_f = R_f i_f + \frac{3}{2} L_{ad}\frac{di_d}{dt} + \left(L_{ad} + L_{sDf}\right)\frac{di_D}{dt} + \left(L_{ad} + L_{sDf} + L_{sf}\right)\frac{di_f}{dt}$$

$$0 = R_D i_D + \frac{3}{2} L_{ad}\frac{di_d}{dt} + \left(L_{ad} + L_{sDf} + L_{sD}\right)\frac{di_D}{dt} + \left(L_{ad} + L_{sDf}\right)\frac{di_f}{dt}$$

$$0 = R_Q i_Q + \frac{3}{2} L_{aq}\frac{di_q}{dt} + \left(L_{aq} + L_{sQ}\right)\frac{di_Q}{dt}$$

Knowing the currents circulating in the machine, it then possible to derive the electro-mechanical torque applied to the shaft of the machine.

This model of the synchronous machine is said to be based on dq axis. The electromagnetic circuits of the rotor are indeed well described and modeled when state variables are expressed in a two axis frame, which rotates in a synchronous manner with the rotor. Because then it is needed to express those variables with respect to the stator three phase system, there exist transformation to go from the rotating frame to the static frame, more suitable to express/describe from the stator side. This transformation is known as "Park" transform, which is mainly a projection of the d/q axis to a static three phase system, with a parameter which is the electrical angular position of the rotor.

**Claims**

1. A hydroelectric power plant real-time monitoring **system** (1;1") comprising

   i) a real-time data acquisition system (11; 11") connected to dedicated sensors positioned in a hydroelectric power plant (2) and configured to acquire in real-time real-time measured power plant data, said real-time measured power plant data comprising real-time measured simulation inputs (111;111")
   ii) a preventive simulation system (16;16"),
   iii) and a preventive diagnostic system (17;17"),

   **characterized**

   - **in that** said preventive simulation system (16;16") is configured to receive said real-time measured simulation inputs (111;111") from said real-time data acquisition system (11;11")
   - **in that** said real-time measured simulation inputs (111;111") comprise a real value of each of at least one power plant control parameter,
   - **in that** at least one predetermined virtual value of said power plant control parameter and at least one predetermined variation rate of said power plant control parameter are stored in a computer comprised in said preventive simulation system (16;16"),
   - **in that** at least one preventive simulation software (161;161") is stored in the computer comprised in said preventive simulation system (16;16") and is configured to simulate periodically a virtual transient behavior of the hydroelectric power plant (2) from said real value to said predetermined virtual value of said power plant control parameter following said predetermined variation rate of power plant control parameter and configured to provide periodically preventive simulated power plant data related to said virtual transient behavior of the hydroelectric power plant (2) comprising at least one preventive simulated monitored quantity (162;162") related to said virtual transient behavior of the hydroelectric power plant (2),
   - **and in that** said preventive diagnostic system (17;17") is configured

      - to compare said preventive simulated monitored quantity (162;162") with a predetermined threshold to trigger, when said preventive simulated monitored quantity (162;162") exceeds said predetermined threshold, an alarm identifying a power plant transient behavior problem in a preventive manner
      - and/or to compute at least one output related to said preventive simulated monitored quantity (162;162") and compare said output with a predetermined threshold to trigger, when said output exceeds said predetermined threshold, an alarm identifying a power plant transient behavior problem in a preventive manner.

2. The real-time monitoring system according to the preceding claim, **characterized**

   - **in that** said real-time measured simulation inputs (111;111") comprise a real value of each of a plurality of power plant control parameters
   - **in that** a predetermined virtual value of each of said plurality of power plant control parameters and a predetermined variation rate of each of said plurality of power plant control parameters are stored in said computer,
   - **in that** a plurality of preventive simulation softwares (161; 161") are stored in said computer and are configured to simulate periodically different virtual transient behaviors of the hydroelectric power plant (2), each preventive simulation software (161;161") simulating periodically a virtual transient behavior from a real value of one of said plurality of power plant control parameters to the corresponding predetermined virtual value of said power plant control parameter following the corresponding predetermined variation rate of said power plant control parameter and providing periodically preventive simulated power plant data related to said virtual transient behavior comprising a preventive simulated monitored quantity (162;162"),
   - and **in that** the preventive diagnostic system (17;17") is configured

      - to compare each preventive simulated monitored quantity (162;162") with a corresponding predetermined threshold to trigger, when one of the preventive simulated monitored quantity (162;162") exceeds the corresponding predetermined threshold, said alarm
      - and/or to compute an output related to each preventive simulated monitored quantity (162;162") and compare each output with a corresponding predetermined threshold to trigger, when one of the output exceeds the corresponding predetermined threshold, said alarm.

3. The real-time monitoring system according to any one of the preceding claims, **characterized in that** said predetermined virtual value of power plant control parameter and said predetermined variation rate of power plant control parameter are related to an operating sequence chosen among an emergency shutdown, a quick shutdown, an untimely valve closure or opening, a unit start-up, a unit loading and unit load rejection.

4. The real-time monitoring system according to anyone of the preceding claims, **characterized in that**

   - said preventive simulated monitored quantity (162;162") is a surge tank (22) water level and **in that** said power plant transient behavior problem is an exceeding of a minimal or maximal predetermined water level threshold in said surge tank (22),
   - and/or **in that** said preventive simulated monitored quantity (162;162") is a pressure along a gallery (23) and/or along a penstock (24) and **in that** said power plant transient behavior problem is respectively an exceeding of a minimal or maximal predetermined pressure threshold along said gallery (23) and/or along said penstock (24),
   - and/or **in that** said preventive simulated monitored quantity (162;162") is a water flow rate in a pipe (25) and **in that** said power plant transient behavior problem is an exceeding of a maximal predetermined water flow rate threshold in said pipe (25),
   - and/or **in that** said preventive simulated monitored quantity (162;162") is a current and/or voltage of a motor-generator (31) and/or of a transformer (35) and **in that** said power plant transient behavior problem is respectively an exceeding of a maximal predetermined current and/or voltage threshold of said motor-generator (31) and/or of said transformer (35),
   - and/or **in that** said preventive simulated monitored quantity (162;162") is a turbine and/or pump (29) rotational speed and **in that** said power plant transient behavior problem is an exceeding of a maximal predetermined rotational speed of said turbine and/or pump (29).

5. The real-time monitoring system according to anyone of the preceding claims, **characterized**

   - **in that** said real-time measured power plant data comprises real-time measured simulation inputs (111) and at least one real-time measured monitored quantity (112),
   - **in that** said real-time monitoring system comprises a real-time simulation system (12) and a real-time diagnostic system (13),
   - **in that** said real-time simulation system (12) is configured to receive said real-time measured simulation inputs (111) from said real-time data acquisition system (11),
   - **in that** a real-time simulation software (121) is stored in a computer comprised in said real-time simulation system (12), said real-time simulation software (121) being configured to simulate in real-time a transient behavior of the hydroelectric power plant (2) based on said real-time measured simulation inputs (111) by modeling said hydroelectric power plant with ordinary differential equations for hydraulic component comprising hydraulic machines, for mechanic component comprising electrical and hydraulic machines inertias and coupling parameters and for electrical component comprising the electrical machines and to provide in real-time real-time simulated power plant data related to said transient behavior of the hydroelectric power plant (2),
   - **in that** said real-time simulated power plant data comprise at least one real-time simulated monitored quantity (122), said real-time simulated monitored quantity (122) corresponding to a simulated quantity of said real-time measured monitored quantity (112)
   - and **in that** said real-time diagnostic system (13) is configured

     - to compare in real-time said real-time measured monitored quantity (112) with said real-time simulated monitored quantity (122) to trigger, in case of deviation above a predetermined threshold, an other alarm identifying an other power plant transient behavior problem
     - and/or to compute in real-time at least one output related to said real-time measured monitored quantity (112) and at least one other output related to said real-time simulated monitored quantity (122) and compare in real-time said output with said other output to trigger, in case of deviation above a predetermined threshold, an other alarm identifying an other power plant transient behavior problem.

6. The real-time monitoring system according to the preceding claim, **characterized in that** said real-time measured monitored quantity (112) comprises at least one of the following component quantities:

- a hydraulic component quantity, such as a penstock (24) pressure, a pipe (25) pressure, and/or a surge tank (22) water level,
- a mechanic component quantity, such as a motor-generator rotor (32) rotational speed and/or a motor-generator rotor (32) torque,
- an electric component quantity, such as a motor-generator rotor (32) current and/or a motor-generator rotor (32) voltage,
- or any combination thereof.

7. The real-time monitoring system according to any one of claims 5 to 6, **characterized in that** said other power plant transient behavior problem is chosen among untimely guide-vane (27) closing, untimely valve closure, safety valve non-closure in case of emergency procedure, air-valve opening, pipe (25) air introduction, flow obstruction by foreign body or wall roughness, cavitation inception, water hammer, water column separation, entrapped air, diaphragm cavitation, pipe (25) rupture or buckling, out of phase synchronization, motor-generator (32) short-circuit, pressure fluctuation due to active component, such as turbine and/or pump (29), pressure fluctuation due to passive component, such as valve (26), and/or any combination thereof.

8. The real-time monitoring system according to any one of the preceding claims, **characterized**

- **in that** said real-time measured power plant data comprises real-time measured simulation inputs (111)
- **in that** said real-time monitoring system comprises a real-time simulation system (12) and a real-time diagnostic system (13),
- **in that** said real-time simulation system (12) is configured to receive said real-time measured simulation inputs (111) from said real-time data acquisition system (11),
- **in that** a real-time simulation software (121) is stored in a computer comprised in said real-time simulation system (12), said real-time simulation software (121) being configured to simulate in real-time a transient behavior of the hydroelectric power plant (2) based on said real-time measured simulation inputs (111) by modeling said hydroelectric power plant with ordinary differential equations for hydraulic component comprising hydraulic machines, for mechanic component comprising electrical and hydraulic machines inertias and coupling parameters and for electrical component comprising the electrical machines and to provide in real-time real-time simulated power plant data related to said transient behavior of the hydroelectric power plant (2),
- **in that** said real-time simulated power plant data comprise at least one real-time simulated monitored quantity (123), said real-time simulated monitored quantity (123) corresponding to a simulated quantity of a non-measured power plant quantity or of a non-measurable power plant quantity
- and **in that** said real-time diagnostic system (13) is configured

  - to compare in real-time said real-time simulated monitored quantity (123) with a predetermined threshold to trigger, when said real-time simulated monitored quantity (123) exceeds said predetermined threshold, a further alarm identifying a further power plant transient behavior problem
  - and/or to compute in real-time at least one output related to said real-time simulated monitored quantity (123) and compare in real-time said output with a predetermined threshold to trigger, when said output exceeds said predetermined threshold, a further alarm identifying a further power plant transient behavior problem.

9. The real-time monitoring system according to the preceding claim, **characterized in that**

  - said non-measured or said non-measurable power plant quantity is a pressure along a gallery (23), a pipe (25) and/or along a penstock (24) and **in that** said further power plant transient behavior problem is respectively an exceeding of a minimal or maximal predetermined pressure threshold along said gallery (23), said pipe (25) and/or along said penstock (24),
  - and/or **in that** said non-measured or said non-measurable power plant quantity is a water flow rate in a pipe (25) and **in that** said further power plant transient behavior problem is an exceeding of a maximal predetermined water flow rate threshold in said pipe (25),
  - and/or **in that** said non-measured or said non-measurable power plant quantity is a current and/or voltage of a motor-generator (31) and/or of a transformer (35) and **in that** said further power plant transient behavior problem is respectively an exceeding of a maximal predetermined current and/or voltage threshold of said motor-generator (31) and/or of said transformer (35),
  - and/or **in that** said non-measured or said non-measurable power plant quantity is a torque in a shaft (30) and **in that** said further power plant transient behavior problem is an exceeding of a maximal predetermined torque threshold of said shaft (30),
- and/or **in that** said non-measured or said non-measurable power plant quantity is a torque transmitted in the foundations (34) of the power plant (2) and **in that** said further power plant transient behavior problem is an exceeding of a maximal predetermined torque threshold transmitted in said foundations (34).

10. The real-time monitoring system according to any one of the preceding claims, **characterized**

- **in that** said real-time measured power plant data comprises real-time measured simulation inputs (111) and at least one real-time measured monitored quantity (112),
- **in that** said real-time monitoring system comprises a real-time diagnostic system (13),
- and **in that** said real-time diagnostic system (13) is configured
- to compare in real-time said at least one real-time measured monitored quantity (112) with a predetermined threshold to trigger, when said real-time measured monitored quantity (112) exceeds said predetermined threshold, an other further alarm identifying an other further power plant transient behavior problem
- and/or to compute in real-time at least one output related to said real-time measured monitored quantity (112) and compare in real-time said output with a predetermined threshold to trigger, when said output exceeds said predetermined threshold, an other further alarm identifying an other further power plant transient behavior problem.

11. The real-time monitoring system according to the preceding claim, **characterized in that**

- said real-time measured monitored quantity (112) is a surge tank (22) water level and **in that** said other further power plant transient behavior problem is an exceeding of a minimal or maximal predetermined water level threshold in said surge tank (22),
- and/or **in that** said real-time measured monitored quantity (112) is a pressure at the bottom of a penstock (24) and **in that** said other further power plant transient behavior problem is an exceeding of a minimal or maximal predetermined pressure threshold at the bottom of said penstock (24),
- and/or **in that** said real-time measured monitored quantity (112) is a current and/or voltage of a motor-generator rotor (32) and/or stator (33) and **in that** said other further power plant transient behavior problem is respectively an exceeding of a maximal predetermined current and/or voltage threshold of said motor-generator rotor (32) and/or stator (33).

12. The real-time monitoring system according to any one of claims 5 to 11, **characterized in that** said real-time measured simulation inputs (111) comprise power plant boundary conditions so that the real-time simulation system (12) is synchronized in real-time with the boundary conditions of the power plant (2), said power plant boundary conditions comprising at least one of the following boundary conditions parameters:

- a hydraulic boundary conditions parameter, such as a reservoir (21) water level,
- an electric boundary conditions parameter, such as a power network (37) voltage and/or a power network (37) frequency
- or any combination thereof.

13. The real-time monitoring system according to any one of claims 5 to 12, **characterized in that** said real-time measured simulation inputs (111) comprise at least one power plant control parameter so that the real-time simulation system (12) is synchronized in real-time with at least one power plant control parameter, said at least one power plant control parameter comprising at least one of the following control parameters:

- a hydraulic control parameter, such as a guide-vane opening and/or a valve opening and/or a blade (28) angle and/or a nozzle vane position,
- an electric control parameter, such as a motor-generator (31) excitation system voltage and/or the circuit breaker state,
- or any combination thereof.

14. The real-time monitoring system according to any one of the preceding claims, **characterized in that** said real-time simulation software (121) or said preventive simulation software (161; 161") is configured to simulate a transient behavior of the hydroelectric power plant (2) by simultaneously modeling at least one hydraulic component, at least one mechanic component, at least one electric component of the hydroelectric power plant (2) and at least one interaction between said components so that a transient behavior problem having its source in such interactions can be identified.

15. The real-time monitoring system according to any one of the preceding claims, **characterized in that** said output is a time-frequency analysis result or an envelope analysis result of said preventive simulated monitored quantity (162;162"), said real-time measured monitored quantity (112) or said real-time simulated monitored quantity (122;123)

16. A hydroelectric power plant real-time monitoring **method** comprising the following steps:

> a) acquiring in real-time from a hydroelectric power plant (2) real-time measured power plant data comprising real-time measured simulation inputs (111;111") comprising a real value of each of at least one power plant control parameter,
> b) periodically simulating a virtual transient behavior of the hydroelectric power plant (2) from said real value of power plant control parameter to at least one predetermined virtual value of said power plant control parameter following at least one predetermined variation rate of said power plant control parameter,
> c) periodically providing preventive simulated power plant data related to said virtual transient behavior of the hydroelectric power plant (2) comprising at least one preventive simulated monitored quantity (162;162"),
> d) comparing said preventive simulated monitored quantity (162;162") with a predetermined threshold to trigger, when said preventive simulated monitored quantity (162;162") exceeds said predetermined threshold, an alarm identifying a power plant transient behavior problem in a preventive manner

and/or computing at least one output related to said preventive simulated monitored quantity (162;162") and comparing in real-time said output with a predetermined threshold to trigger, when said output exceeds said predetermined threshold, an alarm identifying a power plant transient behavior problem in a preventive manner.

17. The real-time monitoring method according to the preceding claim, wherein in step a) acquiring real-time measured power plant data, said real-time measured power plant data comprise at least one real-time measured monitored quantity (112), and wherein the real-time monitoring method comprises the following steps

> e) simulating in real-time a transient behavior of the hydroelectric power plant (2) based on said real-time measured simulation inputs (111) by modeling said hydroelectric power plant with ordinary differential equations for hydraulic component comprising hydraulic machines, for mechanic component comprising electrical and hydraulic machines inertias and coupling parameters and for electrical component comprising the electrical machines,
> f) providing in real-time real-time simulated power plant data related to said transient behavior of the hydroelectric power plant (2), said real-time simulated power plant data comprising at least one real-time simulated monitored quantity (122) corresponding to a simulated quantity of said real-time measured monitored quantity (112),
> g) comparing in real-time said real-time measured monitored quantity (112) with said real-time simulated monitored quantity (122) to trigger, in case of deviation above a predetermined threshold, an other alarm identifying an other power plant transient behavior problem

and/or computing in real-time at least one output related to said real-time measured monitored quantity (112) and at least one other output related to said real-time simulated monitored quantity (122) and comparing in real-time said output with said other output to trigger, in case of deviation above a predetermined threshold, an other alarm identifying an other power plant transient behavior problem.

18. The real-time monitoring method according to any one of claims 16 to 17, wherein the real-time monitoring method comprises the following steps

> h) simulating in real-time a transient behavior of the hydroelectric power plant (2) based on said real-time measured simulation inputs (111) by modeling said hydroelectric power plant with ordinary differential equations for hydraulic component comprising hydraulic machines, for mechanic component comprising electrical and hydraulic machines inertias and coupling parameters and for electrical component comprising the electrical machines,
> i) providing in real-time real-time simulated power plant data, said real-time simulated power plant data comprising at least one real-time simulated monitored quantity (123) corresponding to a simulated quantity of a non-measured power plant quantity or of a non-measurable power plant quantity,
> j) comparing in real-time said real-time simulated monitored quantity (123) corresponding to a simulated quantity of a non-measured power plant quantity or of a non-measurable power plant quantity with a predetermined threshold to trigger, when said real-time simulated monitored quantity (123) exceeds said predetermined threshold, a further alarm identifying a further power plant transient behavior problem

and/or computing in real-time at least one output related to said real-time simulated monitored quantity (123) and comparing in real-time said output with a predetermined threshold to trigger, when said output exceeds said predetermined threshold, a further alarm identifying a further power plant transient behavior problem.

19. The real-time monitoring method according to any one of claims 16 to 18, wherein in step a) acquiring real-time measured power plant data, said real-time measured power plant data comprise at least one real-time measured monitored quantity (112), and wherein the real-time monitoring method comprises the following steps

k) comparing in real-time said at least one real-time measured monitored quantity (112) with a predetermined threshold to trigger, when said real-time measured monitored quantity (112) exceeds said predetermined threshold, an other further alarm identifying an other further power plant transient behavior problem

and/or computing in real-time at least one output related to said real-time measured monitored quantity (112) and comparing in real-time said output with a predetermined threshold to trigger, when said output exceeds said predetermined threshold, an other further alarm identifying an other further power plant transient behavior problem.

## Patentansprüche

1. Echtzeitüberwachungssystem (1; 1 ") für ein Wasserkraftwerk, das Folgendes umfasst:

i) ein Echtzeitdatenerfassungssystem (11; 11"), das mit speziell dafür vorgesehenen Sensoren verbunden ist, die in einem Wasserkraftwerk (2) angeordnet sind und konfiguriert sind, in Echtzeit gemessene Kraftwerksdaten in Echtzeit zu erfassen, wobei die in Echtzeit gemessenen Kraftwerksdaten in Echtzeit gemessene Simulationseingänge (111; 111") umfassen,
ii) ein Vorbeugesimulationssystem (16; 16"),
iii) und ein Vorbeugediagnosesystem (17; 17"),

**dadurch gekennzeichnet, dass**

- das Vorbeugesimulationssystem (16; 16") konfiguriert ist, die in Echtzeit gemessenen Simulationseingänge (111; 111") vom Echtzeitdatenerfassungssystem (11; 11") zu empfangen,
- die in Echtzeit gemessenen Simulationseingänge (111; 111") einen realen Wert von jedem von mindestens einem Kraftwerkssteuerparameter umfassen,
- in einem Computer, der im Vorbeugesimulationssystem (16; 16") enthalten ist, mindestens ein vorgegebener, virtueller Wert des Kraftwerkssteuerparameters und mindestens eine vorgegebene Änderungsgeschwindigkeit des Kraftwerkssteuerparameters gespeichert sind,
- in dem Computer, der im Vorbeugesimulationssystem (16; 16") enthalten ist, mindestens eine Vorbeugesimulations-Software-Einheit (161; 161") gespeichert ist und konfiguriert ist, ein virtuelles Übergangsverhalten des Wasserkraftwerks (2) von dem realen Wert zu dem vorgegebenen, virtuellen Wert des Kraftwerkssteuerparameters periodisch zu simulieren, wobei sie der vorgegebenen Änderungsgeschwindigkeit des Kraftwerkssteuerparameters folgt, und konfiguriert ist, vorbeugende, simulierte Kraftwerksdaten in Bezug auf das virtuelle Übergangsverhalten des Wasserkraftwerks (2), die mindestens eine vorbeugende, simulierte, überwachte Größe (162, 162") in Bezug auf das virtuelle Übergangsverhalten des Wasserkraftwerks (2) umfassen, periodisch bereitzustellen,
- und das Vorbeugediagnosesystem (17; 17") konfiguriert ist,

- die vorbeugende, simulierte, überwachte Größe (162; 162") mit einem vorgegebenen Schwellenwert zu vergleichen, um dann, wenn die vorbeugende, simulierte, überwachte Größe (162; 162") den vorgegebenen Schwellenwert überschreitet, einen Alarm auszulösen, der auf vorbeugende Weise ein Problem des Übergangsverhaltens des Kraftwerks identifiziert,
- und/oder mindestens einen Ausgang mit Bezug auf die vorbeugende, simulierte, überwachte Größe (162; 162") zu berechnen und den Ausgang mit einem vorgegebenen Schwellenwert zu vergleichen, um dann, wenn der Ausgang den vorgegebenen Schwellenwert überschreitet, einen Alarm auszulösen, der auf vorbeugende Weise ein Problem des Übergangsverhaltens des Kraftwerks identifiziert.

2. Echtzeitüberwachungssystem nach dem vorhergehenden Anspruch, **dadurch gekennzeichnet, dass**

- die in Echtzeit gemessenen Simulationseingänge (111; 111") einen realen Wert von jedem von mehreren Kraftwerkssteuerparametern umfassen,
- im Computer ein vorgegebener, virtueller Wert jedes der mehreren Kraftwerkssteuerparameter und eine vorgegebene Änderungsgeschwindigkeit jedes der mehreren Kraftwerkssteuerparameter gespeichert sind,
- im Computer mehrere Vorbeugesimulations-Software-Einheiten (161; 161") gespeichert sind und konfiguriert sind, verschiedene, virtuelle Übergangsverhalten des Wasserkraftwerks (2) periodisch zu simulieren, wobei jede Vorbeugesimulations-Software-Einheit (161; 161") ein virtuelles Übergangsverhalten von einem realen Wert eines der mehreren Kraftwerkssteuerparameter zu dem entsprechenden, vorgegebenen, virtuellen Wert des Kraftwerkssteuerparameters periodisch simuliert, wobei sie der entsprechenden, vorgegebenen Änderungsgeschwindigkeit des Kraftwerkssteuerparameters folgt und vorbeugende, simulierte Kraftwerksdaten mit Bezug auf das virtuelle Übergangsverhalten periodisch bereitstellt, die eine vorbeugende, simulierte, überwachte Größe (162; 162") umfassen,
- und das Vorbeugediagnosesystem (17; 17") konfiguriert ist,

- jede vorbeugende, simulierte, überwachte Größe (162; 162") mit einem entsprechenden, vorgegebenen Schwellenwert zu vergleichen, um dann, wenn eine der vorbeugenden, simulierten, überwachten Größen (162; 162") den entsprechenden, vorgegebenen Schwellenwert überschreitet, den Alarm auszulösen
- und/oder einen Ausgang mit Bezug auf jede vorbeugende, simulierte, überwachte Größe (162; 162") zu berechnen und jeden Ausgang mit einem entsprechenden, vorgegebenen Schwellenwert zu vergleichen, um dann, wenn einer der Ausgänge den entsprechenden, vorgegebenen Schwellenwert überschreitet, den Alarm auszulösen.

3. Echtzeitüberwachungssystem nach einem der vorhergehenden Ansprüche, **dadurch gekennzeichnet, dass** der vorgegebene, virtuelle Wert des Kraftwerkssteuerparameters und die vorgegebene Änderungsgeschwindigkeit des Kraftwerkssteuerparameters mit einer Betriebsfolge in Bezug stehen, die aus einer Notfallabschaltung, einer schnellen Abschaltung, einem unzeitigen Ventilschließen oder -öffnen, einer Inbetriebnahme einer Einheit, einem Belasten einer Einheit und einer Zurückweisung einer Belastung einer Einheit gewählt ist.

4. Echtzeitüberwachungssystem nach einem der vorhergehenden Ansprüche, **dadurch gekennzeichnet, dass**

- die vorbeugende, simulierte, überwachte Größe (162; 162") ein Wasserpegel eines Wasserschlosses (22) ist und das Problem eines Übergangsverhaltens des Kraftwerks ein Überschreiten eines minimalen oder maximalen, vorgegebenen Schwellenwertes des Wasserpegels im Wasserschloss (22) ist,
- und/oder die vorbeugende, simulierte, überwachte Größe (162; 162") ein Druck entlang eines Stollens (23) und/oder entlang eines Druckstollens (24) ist und das Problem eines Übergangsverhaltens des Kraftwerks jeweils ein Überschreiten eines minimalen oder maximalen, vorgegebenen Drucks entlang des Stollens (23) und/oder entlang des Druckstollens (24) ist,
- und/oder die vorbeugende, simulierte, überwachte Größe (162; 162") eine Wasserströmungsgeschwindigkeit in einem Rohr (25) ist und das Problem eines Übergangsverhaltens des Kraftwerks ein Überschreiten eines maximalen, vorgegebenen Schwellenwertes der Wasserströmungsgeschwindigkeit im Rohr (25) ist,
- und/oder die vorbeugende, simulierte, überwachte Größe (162; 162") ein Strom und/oder eine Spannung eines Motorgenerators (31) und/oder eines Transformators (35) ist und das Problem eines Übergangsverhaltens des Kraftwerks jeweils ein Überschreiten eines maximalen, vorgegebenen Stromschwellenwertes und/oder Spannungsschwellenwertes des Motorgenerators (31) und/oder des Transformators (35) ist,

und/oder die vorbeugende, simulierte, überwachte Größe (162; 162") eine Drehzahl einer Turbine und/oder einer Pumpe (29) ist und das Problem eines Übergangsverhaltens des Kraftwerks ein Überschreiten einer maximalen, vorgegebenen Drehzahl der Turbine und/oder der Pumpe (29) ist.

5. Echtzeitüberwachungssystem nach einem der vorhergehenden Ansprüche, **dadurch gekennzeichnet, dass**

- die in Echtzeit gemessenen Kraftwerksdaten die in Echtzeit gemessenen Simulationseingänge (111) und mindestens eine in Echtzeit gemessene, überwachte Größe (112) umfassen,
- das Echtzeitüberwachungssystem ein Echtzeitsimulationssystem (12) und ein Echtzeitdiagnosesystem (13) umfasst,

- das Echtzeitsimulationssystem (12) konfiguriert ist, die in Echtzeit gemessenen Simulationseingänge (111) vom Echtzeitdatenerfassungssystem (11) zu empfangen,
- in einem Computer, der im Echtzeitsimulationssystem (12) enthalten ist, eine Echtzeitsimulations-Software-Einheit (121) gespeichert ist, wobei die Echtzeitsimulations-Software-Einheit (121) konfiguriert ist, auf der Basis der in Echtzeit gemessenen Simulationseingänge (111) durch Modellieren des Wasserkraftwerks mit regulären Differentialgleichungen für eine hydraulische Komponente, die hydraulische Maschinen umfasst, für eine mechanische Komponente, die elektrische und hydraulische Maschinen, Schwungmassen und Kopplungsparameter umfasst, und für eine elektrische Komponente, die die elektrischen Maschinen umfasst, ein Übergangsverhalten des Wasserkraftwerks (2) in Echtzeit zu simulieren und in Echtzeit simulierte Kraftwerksdaten mit Bezug auf das Übergangsverhalten des Wasserkraftwerks (2) in Echtzeit bereitzustellen,
- die in Echtzeit simulierten Kraftwerksdaten mindestens eine in Echtzeit simulierte, überwachte Größe (122) umfassen, wobei die in Echtzeit simulierte, überwachte Größe (122) einer simulierten Größe der in Echtzeit gemessenen, überwachten Größe (112) entspricht,
- und das Echtzeitdiagnosesystem (13) konfiguriert ist,

- die in Echtzeit gemessene, überwachte Größe (112) in Echtzeit mit der in Echtzeit simulierten, überwachten Größe (122) zu vergleichen, um im Fall einer Abweichung über einem vorgegebenen Schwellenwert einen anderen Alarm auszulösen, der ein anderes Problem eines Übergangsverhaltens des Kraftwerks identifiziert,
- und/oder mindestens einen Ausgang mit Bezug auf die in Echtzeit gemessene, überwachte Größe (112) und mindestens einen anderen Ausgang mit Bezug auf die in Echtzeit simulierte, überwachte Größe (122) in Echtzeit zu berechnen und den Ausgang in Echtzeit mit dem anderen Ausgang zu vergleichen, um im Fall einer Abweichung über einem vorgegebenen Schwellenwert einen anderen Alarm auszulösen, der ein anderes Problem eines Übergangsverhaltens des Kraftwerks identifiziert.

6. Echtzeitüberwachungssystem nach dem vorhergehenden Anspruch, **dadurch gekennzeichnet, dass** die in Echtzeit gemessene, überwachte Größe (112) mindestens eine der folgenden Komponentengrößen umfasst:

- eine Größe einer hydraulischen Komponente, wie etwa ein Druck eines Druckstollens (24), ein Druck eines Rohrs (25) und/oder ein Wasserpegel eines Wasserschlosses (22),
- eine Größe einer mechanischen Komponente, wie etwa eine Drehzahl eines Motorgeneratorrotors (32) und/oder ein Drehmoment eines Motorgeneratorrotors (32),
- eine Größe einer elektrischen Komponente, wie etwa ein Strom eines Motorgeneratorrotors (32) und/oder eine Spannung eines Motorgeneratorrotors (32),
- oder eine beliebige Kombination davon.

7. Echtzeitüberwachungssystem nach einem der Ansprüche 5 bis 6, **dadurch gekennzeichnet, dass** das andere Problem eines Übergangsverhaltens des Kraftwerks aus einem unzeitigen Schließen der Leitschaufel (27), einem unzeitigen Ventilschließen, einem Nicht-Schließen eines Sicherheitsventils im Fall eines Notfallvorgangs, einem Öffnen eines Luftventils, einem Lufteintritt in ein Rohr (25), einer Strömungsbehinderung durch einen Fremdkörper oder durch eine Wandrauigkeit, dem Beginn einer Hohlraumbildung, einem Wasserhammer, einer Wassersäulentrennung, eingeschlossener Luft, einer Membranhohlraumbildung, einem Riss oder Knicken eines Rohrs (25), einem Aus-der-Phase-Gelangen der Synchronisation, einem Kurzschluss des Motorgenerators (32), einer Druckschwankung aufgrund einer aktiven Komponente, wie etwa eine Turbine und/oder eine Pumpe (29), einer Druckschwankung aufgrund einer passiven Komponente, wie etwa ein Ventil (26), und/oder einer beliebigen Kombination davon gewählt ist.

8. Echtzeitüberwachungssystem nach einem der vorhergehenden Ansprüche, **dadurch gekennzeichnet, dass**

- die in Echtzeit gemessenen Kraftwerksdaten die in Echtzeit gemessenen Simulationseingänge (111) umfassen,
- das Echtzeitüberwachungssystem ein Echtzeitsimulationssystem (12) und ein Echtzeitdiagnosesystem (13) umfasst,
- das Echtzeitsimulationssystem (12) konfiguriert ist, die in Echtzeit gemessenen Simulationseingänge (111) vom Echtzeitdatenerfassungssystem (11) zu empfangen,
- in einem Computer, der im Echtzeitsimulationssystem (12) enthalten ist, eine Echtzeitsimulations-Software-Einheit (121) gespeichert ist, wobei die Echtzeitsimulations-Software-Einheit (121) konfiguriert ist, auf der Basis der in Echtzeit gemessenen Simulationseingänge (111) durch Modellieren des Wasserkraftwerks mit regulären Differentialgleichungen für eine hydraulische Komponente, die hydraulische Maschinen umfasst, für eine mechanische Komponente, die elektrische und hydraulische Maschinen, Schwungmassen und Kopplungsparameter umfasst, und für eine elektrische Komponente, die die elektrischen Maschinen umfasst, ein Übergangsverhalten des Wasserkraftwerks (2) in Echtzeit zu simulieren und in Echtzeit simulierte Kraftwerksdaten mit Bezug auf das Übergangsverhalten des Wasserkraftwerks (2) in Echtzeit bereitzustellen,

- die in Echtzeit simulierten Kraftwerksdaten mindestens eine in Echtzeit simulierte, überwachte Größe (123) umfassen, wobei die in Echtzeit simulierte, überwachte Größe (123) einer simulierten Größe einer nicht gemessenen Größe des Kraftwerks oder einer nicht messbaren Größe des Kraftwerks entspricht,

- und das Echtzeitdiagnosesystem (13) konfiguriert ist,

- die in Echtzeit simulierte, überwachte Größe (123) in Echtzeit mit einem vorgegebenen Schwellenwert zu vergleichen, um dann, wenn die in Echtzeit simulierte, überwachte Größe (123) den vorgegebenen Schwellenwert überschreitet, einen weiteren Alarm auszulösen, der ein weiteres Problem eines Übergangsverhaltens des Kraftwerks identifiziert,

- und/oder mindestens einen Ausgang mit Bezug auf die in Echtzeit simulierte, überwachte Größe (123) in Echtzeit zu berechnen und den Ausgang in Echtzeit mit einem vorgegebenen Schwellenwert zu vergleichen, um dann, wenn der Ausgang den vorgegebenen Schwellenwert überschreitet, einen weiteren Alarm auszulösen, der ein weiteres Problem eines Übergangsverhaltens des Kraftwerks identifiziert.

9. Echtzeitüberwachungssystem nach dem vorhergehenden Anspruch, **dadurch gekennzeichnet, dass**

- die nicht gemessene oder die nicht messbare Größe des Kraftwerks ein Druck entlang eines Stollens (23), eines Rohrs (25) und/oder entlang eines Druckstollens (24) ist und das weitere Problem eines Übergangsverhaltens des Kraftwerks jeweils ein Überschreiten eines minimalen oder maximalen, vorgegebenen Schwellenwertes des Drucks entlang des Stollens (23), entlang des Rohrs (25) und/oder entlang des Druckstollens (24) ist,

- und/oder die nicht gemessene oder die nicht messbare Größe des Kraftwerks eine Wasserströmungsgeschwindigkeit in einem Rohr (25) ist und das weitere Problem eines Übergangsverhaltens des Kraftwerks ein Überschreiten eines maximalen, vorgegebenen Schwellenwertes der Wasserströmungsgeschwindigkeit in dem Rohr (25) ist,

- und/oder die nicht gemessene oder die nicht messbare Größe des Kraftwerks ein Strom und/oder eine Spannung eines Motörgenerators (31) und/oder eines Transformators (35) ist und das weitere Problem eines Übergangsverhaltens des Kraftwerks jeweils ein Überschreiten eines maximalen, vorgegebenen Stromschwellenwertes und/oder Spannungsschwellenwertes des Motorgenerators (31) und/oder des Transformators (35) ist,

- und/oder die nicht gemessene oder die nicht messbare Größe des Kraftwerks ein Drehmoment in einer Welle (30) ist und das weitere Problem eines Übergangsverhaltens des Kraftwerks ein Überschreiten eines maximalen, vorgegebenen Schwellenwertes des Drehmoments der Welle (30) ist,

- und/oder die nicht gemessene oder die nicht messbare Größe des Kraftwerks ein Drehmoment ist, das in die Fundamente (34) des Kraftwerks (2) übertragen wird, und das weitere Problem eines Übergangsverhaltens des Kraftwerks ein Überschreiten eines maximalen, vorgegebenen Schwellenwertes des Drehmoments ist, das in die Fundamente (34) übertragen wird.

10. Echtzeitüberwachungssystem nach einem der vorhergehenden Ansprüche, **dadurch gekennzeichnet, dass**

- die in Echtzeit gemessenen Kraftwerksdaten die in Echtzeit gemessenen Simulationseingänge (111) und mindestens eine in Echtzeit gemessene, überwachte Größe (112) umfassen,

- das Echtzeitüberwachungssystem ein Echtzeitdiagnosesystem (13) umfasst,

- und das Echtzeitdiagnosesystem (13) konfiguriert ist,

- die mindestens eine in Echtzeit gemessene, überwachte Größe (112) in Echtzeit mit einem vorgegebenen Schwellenwert zu vergleichen, um dann, wenn die in Echtzeit gemessene, überwachte Größe (112) den vorgegebenen Schwellenwert überschreitet, einen anderen, weiteren Alarm auszulösen, der ein anderes, weiteres Problem eines Übergangsverhaltens des Kraftwerks identifiziert,

- und/oder mindestens einen Ausgang mit Bezug auf die in Echtzeit gemessene, überwachte Größe (112) in Echtzeit zu berechnen und den Ausgang in Echtzeit mit einem vorgegebenen Schwellenwert zu vergleichen, um dann, wenn der Ausgang den vorgegebenen Schwellenwert überschreitet, einen anderen, weiteren Alarm auszulösen, der ein anderes, weiteres Problem eines Übergangsverhaltens des Kraftwerks identifiziert.

**11.** Echtzeitüberwachungssystem nach dem vorhergehenden Anspruch, **dadurch gekennzeichnet, dass**

- die in Echtzeit gemessene, überwachte Größe (112) ein Wasserpegel eines Wasserschlosses (22) ist und das andere, weitere Problem eines Übergangsverhaltens des Kraftwerks ein Überschreiten eines minimalen oder maximalen, vorgegebenen Schwellenwertes des Wasserpegels im Wasserschloss (22) ist,
- und/oder die in Echtzeit gemessene, überwachte Größe (112) ein Druck am Boden eines Druckstollens (24) ist und das andere, weitere Problem eines Übergangsverhaltens des Kraftwerks ein Überschreiten eines minimalen oder maximalen, vorgegebenen Schwellenwertes des Drucks am Boden des Druckstollens (24) ist,
- und/oder die in Echtzeit gemessene, überwachte Größe (112) ein Strom und/oder eine Spannung eines Motorgeneratorrotors (32) und/oder eines Motorgeneratorstators (33) ist und das andere, weitere Problem eines Übergangsverhaltens des Kraftwerks jeweils ein Überschreiten eines maximalen, vorgegebenen Stromschwellenwertes und/oder Spannungsschwellenwertes des Motorgeneratorrotors (32) und/oder des Motorgeneratorstators (33) ist.

**12.** Echtzeitüberwachungssystem nach einem der Ansprüche 5 bis 11, **dadurch gekennzeichnet, dass** die in Echtzeit gemessenen Simulationseingänge (111) Kraftwerksgrenzbedingungen umfassen, derart, dass das Echtzeitsimulationssystem (12) in Echtzeit mit den Grenzbedingungen des Kraftwerks (2) synchronisiert ist, wobei die Kraftwerksgrenzbedingungen mindestens einen der folgenden Grenzbedingungsparameter umfassen:

- einen hydraulischen Grenzbedingungsparameter, wie etwa ein Wasserpegel des Speichers (21),
- einen elektrischen Grenzbedingungsparameter, wie etwa eine Spannung des Stromnetzes (37) und/oder eine Frequenz des Stromnetzes (37),
- oder eine beliebige Kombination davon.

**13.** Echtzeitüberwachungssystem nach einem der Ansprüche 5 bis 12, **dadurch gekennzeichnet, dass** die in Echtzeit gemessenen Simulationseingänge (111) mindestens einen Kraftwerksteuerparameter umfassen, derart, dass das Echtzeitsimulationssystem (12) in Echtzeit mit mindestens einem Kraftwerkssteuerparameter synchronisiert ist, wobei der mindestens eine Kraftwerkssteuerparameter mindestens einen der folgenden Steuerparameter umfasst:

- einen hydraulischen Steuerparameter, wie etwa eine Leitschaufelöffnung und/oder eine Ventilöffnung und/oder ein Winkel eines Schaufelblatts (28) und/oder eine Düsenschaufelposition,
- einen elektrischen Steuerparameter, wie etwa eine Spannung des Anregungssystems des Motorgenerators (31) und/oder der Schaltungsunterbrecherzustand,
- oder eine beliebige Kombination davon.

**14.** Echtzeitüberwachungssystem nach einem der vorhergehenden Ansprüche, **dadurch gekennzeichnet, dass** die Echtzeitsimulations-Software-Einheit (121) oder die Vorbeugesimulations-Software-Einheit (161; 161") konfiguriert ist, durch gleichzeitiges Modellieren mindestens einer hydraulischen Komponente, mindestens einer mechanischen Komponente, mindestens einer elektrischen Komponente des Wasserkraftwerks (2) und mindestens einer Wechselwirkung zwischen den Komponenten ein Übergangsverhalten des Wasserkraftwerks (2) zu simulieren, derart, dass ein Problem eines Übergangsverhaltens, dessen Quelle in derartigen Wechselwirkungen liegt, identifiziert werden kann.

**15.** Echtzeitüberwachungssystem nach einem der vorhergehenden Ansprüche, **dadurch gekennzeichnet, dass** der Ausgang ein Zeit-Frequenz-Analyseergebnis oder ein Hüllkurven-Analyseergebnis der vorbeugenden, simulierten, überwachten Größe (162; 162"), der in Echtzeit gemessenen, überwachten Größe (112) oder der in Echtzeit simulierten, überwachten Größe (122; 123) ist.

**16.** Echtzeitüberwachungsverfahren für ein Wasserkraftwerk, das die folgenden Schritte umfasst:

a) Erfassen von in Echtzeit gemessenen Kraftwerksdaten von einem Wasserkraftwerk (2) in Echtzeit, die in Echtzeit gemessene Simulationseingänge (111; 111") umfassen, die einen realen Wert von jedem von mindestens einem Kraftwerkssteuerparameter umfassen,
b) periodisches Simulieren eines virtuellen Übergangsverhaltens des Wasserkraftwerks (2) von dem realen Wert des Kraftwerkssteuerparameters zu mindestens einem vorgegebenen, virtuellen Wert des Kraftwerkssteuerparameters, wobei mindestens einer vorgegebenen Änderungsgeschwindigkeit des Kraftwerkssteuerparameters gefolgt wird,
c) periodisches Bereitstellen vorbeugender, simulierter Kraftwerksdaten mit Bezug auf das virtuelle Übergangsverhalten des Wasserkraftwerks (2), die mindestens eine vorbeugende, simulierte, überwachte Größe (162; 162") umfassen,

d) Vergleichen der vorbeugenden, simulierten, überwachten Größe (162; 162") mit einem vorgegebenen Schwellenwert, um dann, wenn die vorbeugende, simulierte, überwachte Größe (162; 162") den vorgegebenen Schwellenwert überschreitet, einen Alarm auszulösen, der auf vorbeugende Weise ein Problem eines Übergangsverhaltens des Kraftwerks identifiziert,

und/oder Berechnen mindestens eines Ausgangs mit Bezug auf die vorbeugende, simulierte, überwachte Größe (162; 162") und Vergleichen des Ausgangs in Echtzeit mit einem vorgegebenen Schwellenwert, um dann, wenn der Ausgang den vorgegebenen Schwellenwert überschreitet, einen Alarm auszulösen, der auf vorbeugende Weise ein Problem eines Übergangsverhaltens des Kraftwerks identifiziert.

17. Echtzeitüberwachungsverfahren nach dem vorhergehenden Anspruch, wobei in Schritt a), Erfassen der in Echtzeit gemessenen Kraftwerksdaten, die in Echtzeit gemessenen Kraftwerksdaten mindestens eine in Echtzeit gemessene, überwachte Größe (112) umfassen und wobei das Echtzeitüberwachungsverfahren die folgenden Schritte umfasst:

e) Simulieren eines Übergangsverhaltens des Wasserkraftwerks (2) in Echtzeit auf der Basis der in Echtzeit gemessenen Simulationseingänge (111) durch Modellieren des Wasserkraftwerks mit regulären Differentialgleichungen für eine hydraulische Komponente, die hydraulische Maschinen umfasst, für eine mechanische Komponente, die elektrische und hydraulische Maschinen, Schwungmassen und Kopplungsparameter umfasst, und für eine elektrische Komponente, die die elektrischen Maschinen umfasst,

f) Bereitstellen von in Echtzeit simulierten Kraftwerksdaten mit Bezug auf das Übergangsverhalten des Wasserkraftwerks (2) in Echtzeit, wobei die in Echtzeit simulierten Kraftwerksdaten mindestens eine in Echtzeit simulierte, überwachte Größe (122) umfassen, die einer simulierten Größe der in Echtzeit gemessenen, überwachten Größe (112) entspricht,

g) Vergleichen der in Echtzeit gemessenen, überwachten Größe (112) in Echtzeit mit der in Echtzeit simulierten, überwachten Größe (122), um im Fall einer Abweichung über einem vorgegebenen Schwellenwert einen anderen Alarm auszulösen, der ein anderes Problem eines Übergangsverhaltens des Kraftwerks identifiziert,

und/oder Berechnen mindestens eines Ausgangs mit Bezug auf die in Echtzeit gemessene, überwachte Größe (112) und mindestens eines anderen Ausgangs mit Bezug auf die in Echtzeit simulierte, überwachte Größe (122) in Echtzeit und Vergleichen des Ausgangs in Echtzeit mit dem anderen Ausgang, um im Fall einer Abweichung über einem vorgegebenen Schwellenwert einen anderen Alarm auszulösen, der ein anderes Problem eines Übergangsverhaltens des Kraftwerks identifiziert.

18. Echtzeitüberwachungsverfahren nach einem der Ansprüche 16 bis 17, wobei das Echtzeitüberwachungsverfahren die folgenden Schritte umfasst:

h) Simulieren eines Übergangsverhaltens des Wasserkraftwerks (2) in Echtzeit auf der Basis der in Echtzeit gemessenen Simulationseingänge (111) durch Modellieren des Wasserkraftwerks mit regulären Differentialgleichungen für eine hydraulische Komponente, die hydraulische Maschinen umfasst, für eine mechanische Komponente, die elektrische und hydraulische Maschinen, Schwungmassen und Kopplungsparameter umfasst, und für eine elektrische Komponente, die die elektrischen Maschinen umfasst,

i) Bereitstellen von in Echtzeit simulierten Kraftwerksdaten in Echtzeit, wobei die in Echtzeit simulierten Kraftwerksdaten mindestens eine in Echtzeit simulierte, überwachte Größe (123) umfassen, die einer simulierten Größe einer nicht gemessenen Größe des Kraftwerks oder einer nicht messbaren Größe des Kraftwerks entspricht,

j) Vergleichen der in Echtzeit simulierten, überwachten Größe (123), die einer simulierten Größe einer nicht gemessenen Größe des Kraftwerks oder einer nicht messbaren Größe des Kraftwerks entspricht, in Echtzeit mit einem vorgegebenen Schwellenwert, um dann, wenn die in Echtzeit simulierte, überwachte Größe (123) den vorgegebenen Schwellenwert überschreitet, einen weiteren Alarm auszulösen, der ein weiteres Problem eines Übergangsverhaltens des Kraftwerks identifiziert,

- und/oder Berechnen mindestens eines Ausgangs mit Bezug auf die in Echtzeit simulierte, überwachte Größe (123) in Echtzeit und Vergleichen des Ausgangs in Echtzeit mit einem vorgegebenen Schwellenwert, um dann, wenn der Ausgang den vorgegebenen Schwellenwert überschreitet, einen weiteren Alarm auszulösen, der ein weiteres Problem eines Übergangsverhaltens des Kraftwerks identifiziert.

**19.** Echtzeitüberwachungsverfahren nach einem der Ansprüche 16 bis 18, wobei in Schritt a), Erfassen von in Echtzeit gemessenen Kraftwerksdaten, die in Echtzeit gemessenen Kraftwerksdaten mindestens eine in Echtzeit gemessene, überwachte Größe (112) umfassen und wobei das Echtzeitüberwachungsverfahren die folgenden Schritte umfasst:

k) Vergleichen der mindestens einen in Echtzeit gemessenen, überwachten Größe (112) in Echtzeit mit einem vorgegebenen Schwellenwert, um dann, wenn die in Echtzeit gemessene, überwachte Größe (112) den vorgegebenen Schwellenwert überschreitet, einen anderen, weiteren Alarm auszulösen, der ein anderes, weiteres Problem eines Übergangsverhaltens des Kraftwerks identifiziert,

und/oder Berechnen mindestens einen Ausgangs mit Bezug auf die in Echtzeit gemessene, überwachte Größe (112) in Echtzeit und Vergleichen des Ausgangs in Echtzeit mit einem vorgegebenen Schwellenwert, um dann, wenn der Ausgang den vorgegebenen Schwellenwert überschreitet, einen anderen, weiteren Alarm auszulösen, der ein anderes, weiteres Problem eines Übergangsverhaltens des Kraftwerks identifiziert.

## Revendications

**1.** Système de surveillance en temps réel de centrale hydroélectrique (1 ; 1") comprenant :

i) un système d'acquisition de données en temps réel (11 ; 11") connecté à des capteurs spécialisés positionnés dans une centrale hydroélectrique (2) et configurés de façon à acquérir en temps réel des données de la centrale mesurées en temps réel, lesdites données de la centrale mesurées en temps réel comprenant des entrées de simulation mesurées en temps réel (111 ; 111"),
ii) un système de simulation préventif (16 ; 16"),
iii) et un système de diagnostic préventif (17 ; 17"),

**caractérisé**

- **en ce que** ledit système de simulation préventif (16 ; 16") est configuré de façon à recevoir lesdites entrées de simulation mesurées en temps réel (111 ; 111") provenant dudit système d'acquisition de données en temps réel (11 ; 11"),
- **en ce que** lesdites entrées de simulation mesurées en temps réel (111 ; 111") comprennent une valeur réelle de chacun d'au moins un paramètre de commande de la centrale,
- **en ce qu**'au moins une valeur virtuelle prédéterminée dudit paramètre de commande de la centrale et au moins une vitesse de variation prédéterminée dudit paramètre de commande de la centrale sont stockées dans un ordinateur compris dans ledit système de simulation préventif (16 ; 16"),
- **en ce qu**'au moins un logiciel de simulation préventif (161 ; 161") est stocké dans l'ordinateur compris dans ledit système de simulation préventif (16 ; 16") et est configuré de façon à simuler périodiquement un comportement transitoire virtuel de la centrale hydroélectrique (2) de ladite valeur réelle à ladite valeur virtuelle prédéterminée dudit paramètre de commande de la centrale selon ladite vitesse de variation prédéterminée dudit paramètre de commande de la centrale et configuré de façon à fournir périodiquement des données simulées préventives de la centrale liées audit comportement transitoire virtuel de la centrale hydroélectrique (2) comprenant au moins une grandeur surveillée simulée préventive (162 ; 162") liée audit comportement transitoire virtuel de la centrale hydroélectrique (2),
- **et en ce que** ledit système de diagnostic préventif (17 ; 17") est configuré de façon à

- comparer ladite grandeur surveillée simulée préventive (162 ; 162") avec un seuil prédéterminé de façon à déclencher, lorsque ladite grandeur surveillée simulée préventive (162; 162") dépasse ledit seuil prédéterminé, une alarme identifiant un problème de comportement transitoire de la centrale d'une manière préventive,
- et/ou de façon à calculer au moins une sortie liée à ladite grandeur surveillée simulée préventive (162 ; 162") et à comparer ladite sortie avec un seuil prédéterminé afin de déclencher, lorsque ladite sortie dépasse ledit seuil prédéterminé, une alarme identifiant un problème de comportement transitoire de la centrale d'une manière préventive.

**2.** Système de surveillance en temps réel selon la revendication précédente, **caractérisé**

- **en ce que** lesdites entrées de simulation mesurées en temps réel (111 ; 111") comprennent une valeur réelle de chacun d'une pluralité de paramètres de commande de la centrale,
- **en ce qu'**une valeur prédéterminée de chacun de ladite pluralité de paramètres de commande de la centrale et une vitesse de variation prédéterminée de chacun de ladite pluralité de paramètres de commande de la centrale sont stockées dans ledit ordinateur,
- **en ce qu'**une pluralité de logiciels de simulation préventifs (161 ; 161") sont stockés dans ledit ordinateur et sont configurés de façon à simuler périodiquement différents comportements transitoires virtuels de la centrale hydroélectrique (2), chaque logiciel de simulation préventif (161 ; 161") simulant périodiquement un comportement transitoire virtuel d'une valeur réelle d'un de ladite pluralité de paramètres de commande de la centrale à la valeur virtuelle prédéterminée correspondante dudit paramètre de commande de la centrale selon la vitesse de variation prédéterminée correspondant dudit paramètre de commande de la centrale et fournissant périodiquement des données simulées préventives de la centrale liées audit comportement transitoire virtuel comprenant une grandeur surveillée simulée préventive (162 ; 162"),
- et **en ce que** ledit système de diagnostic préventif (17 ; 17") est configuré de façon à

 - comparer chaque grandeur surveillée simulée préventive (162 ; 162") avec un seuil prédéterminé correspondant de façon à déclencher ladite alarme lorsqu'une des grandeurs surveillées simulées préventives (162 ; 162") dépasse le seuil prédéterminé correspondant,
 - et/ou de façon à calculer une sortie liée à chaque grandeur surveillée simulée préventive (162 ; 162") et à comparer chaque sortie avec un seuil prédéterminé correspondant de façon à déclencher ladite alarme lorsqu'une des sorties dépasse le seuil prédéterminé correspondant.

3. Système de surveillance en temps réel selon l'une quelconque des revendications précédentes, **caractérisé en ce que** ladite valeur virtuelle prédéterminée du paramètre de commande de la centrale et ladite vitesse de variation prédéterminée du paramètre de commande de la centrale sont liées à une séquence de fonctionnement choisie parmi un arrêt de secours, un arrêt rapide, une fermeture ou une ouverture de soupape inopportune, un démarrage d'unité, un rejet de chargement d'unité et de charge d'unité.

4. Système de surveillance en temps réel selon l'une quelconque des revendications précédentes, **caractérisé en ce que**

 - ladite grandeur surveillée simulée préventive (162 ; 162") est un niveau d'eau de réservoir d'équilibre (22) et **en ce que** ledit problème de comportement transitoire de la centrale est un dépassement d'un seuil minimal ou maximum prédéterminé du niveau d'eau dans ledit réservoir d'équilibre (22),
 - et/ou **en ce que** ladite grandeur surveillée simulée préventive (162 ; 162") est une pression le long d'une galerie (23) et/ou le long d'une conduite forcée (24) et **en ce que** ledit problème de comportement transitoire de la centrale est respectivement un dépassement d'un seuil minimal ou maximum prédéterminé de la pression le long de ladite galerie (23) et/ou le long de ladite conduite forcée (24),
 - et/ou **en ce que** ladite grandeur surveillée simulée préventive (162 ; 162") est un débit d'eau dans une canalisation (25) et **en ce que** ledit problème de comportement transitoire de la centrale est un dépassement d'un seuil maximal prédéterminé du débit d'eau dans ladite canalisation (25),
 - et/ou **en ce que** ladite grandeur surveillée simulée préventive (162 ; 162") est un courant et/ou une tension d'un groupe générateur (31) et/ou d'un transformateur (35) et **en ce que** ledit problème de comportement transitoire de la centrale est respectivement un dépassement d'un seuil maximal prédéterminé du courant et/ou de la tension dudit groupe générateur (31) et/ou dudit transformateur (35),
 - et/ou **en ce que** ladite grandeur surveillée simulée préventive (162 ; 162") est une vitesse de rotation de turbine et/ou de pompe (29) et **en ce que** ledit problème de comportement transitoire de la centrale est un dépassement d'une vitesse de rotation maximale prédéterminée de ladite turbine et/ou de ladite pompe (29).

5. Système de surveillance en temps réel selon l'une quelconque des revendications précédentes, **caractérisé**

 - **en ce que** lesdites données de la centrale mesurées en temps réel comprennent des entrées de simulation mesurées en temps réel (111) et au moins une grandeur surveillée mesurée en temps réel (112),
 - **en ce que** ledit système de surveillance en temps réel comprend un système de simulation en temps réel (12) et un système de diagnostic en temps réel (13),
 - **en ce que** ledit système de simulation en temps réel (12) est configuré de façon à recevoir lesdites entrées de simulation mesurées en temps réel (111) provenant dudit système d'acquisition de données en temps réel (11),

- **en ce qu'**un logiciel de simulation en temps réel (121) est stocké dans un ordinateur compris dans ledit système de simulation en temps réel (12), ledit logiciel de simulation en temps réel (121) étant configuré de façon à simuler en temps réel un comportement transitoire de la centrale hydroélectrique (2) en se basant sur lesdites entrées de simulation mesurées en temps réel (111) en modélisant ladite centrale hydroélectrique avec des équations différentielles ordinaires pour la composante hydraulique comprenant les machines hydrauliques, pour la composante mécanique comprenant les inerties et paramètres de couplage des machines électriques et hydrauliques et pour la composante électrique comprenant les machines électriques et de façon à fournir en temps réel des données de la centrale simulées en temps réel liées audit comportement transitoire de la centrale hydroélectrique (2),

- **en ce que** lesdites données de la centrale simulées en temps réel comprennent au moins une grandeur surveillée simulée en temps réel (122), ladite grandeur surveillée simulée en temps réel (122) correspondant à une grandeur simulée de ladite grandeur surveillée mesurée en temps réel (112),

- et **en ce que** ledit système de diagnostic en temps réel (13) est configuré de façon à

- comparer en temps réel ladite grandeur surveillée mesurée en temps réel (112) avec ladite grandeur surveillée simulée en temps réel (122) afin de déclencher, en cas d'un écart au-dessus d'un seuil prédéterminé, une autre alarme identifiant un autre problème de comportement transitoire de la centrale,

- et/ou de façon à calculer en temps réel au moins une sortie liée à ladite grandeur surveillées mesurée en temps réel (112) et au moins une autre sortie liée à ladite grandeur surveillée simulée en temps réel (122) et de façon à comparer en temps réel ladite sortie avec ladite autre sortie afin de déclencher, dans le cas d'un écart au-dessus d'un seuil prédéterminé, une autre alarme identifiant un autre problème de comportement transitoire de la centrale.

6. Système de surveillance en temps réel selon la revendication précédente, **caractérisé en ce que** ladite grandeur surveillée mesurée en temps réel (112) comprend au moins une des grandeurs de composantes suivantes :

- une grandeur de composante hydraulique, telle qu'une pression de conduite forcée (24), une pression de canalisation (25) et/ou un niveau d'eau de réservoir d'équilibre (22),

- une grandeur de composante mécanique, telle qu'une vitesse de rotation de groupe générateur (32) et/ou un couple de rotor de groupe générateur (32),

- une grandeur de composante électrique, telle qu'un courant de rotor de groupe générateur (32) et/ou une tension de rotor de groupe générateur (32),

- ou n'importe quelle combinaison de ces grandeurs.

7. Système de surveillance en temps réel selon l'une quelconque des revendications 5 à 6, **caractérisé en ce que** ledit autre problème de comportement transitoire de la centrale est choisi parmi une fermeture inopportune d'aube directrice (27), une fermeture inopportune de soupape, une non fermeture de soupape de sûreté en cas de procédure d'urgence, une ouverture de reniflard, une introduction d'air dans la canalisation (25), une obstruction de l'écoulement par un corps étranger ou une rugosité de paroi, un commencement de cavitation, un coup de bélier, une séparation de colonne d'eau, de l'air prisonnier, une cavitation de diaphragme, une rupture ou une déformation de canalisation (25), une synchronisation déphasée, un court-circuit de groupe générateur (32), une fluctuation de pression due à un élément actif, comme une turbine et/ou une pompe (29), une fluctuation de pression due à un élément passif, comme une soupape (26), ou n'importe quelle combinaison de ces problèmes.

8. Système de surveillance en temps réel selon l'une quelconque des revendications précédentes, **caractérisé**

- **en ce que** lesdites données de la centrale mesurées en temps réel comprennent des entrées de simulation mesurées en temps réel (111),

- **en ce que** ledit système de surveillance en temps réel comprend un système de simulation en temps réel (12) et un système de diagnostic en temps réel (13),

- **en ce que** ledit système de simulation en temps réel (12) est configuré de façon à recevoir lesdites entrées de simulation mesurées en temps réel (111) provenant dudit système d'acquisition de données en temps réel (11),

- **en ce qu'**un logiciel de simulation en temps réel (121) est stocké dans un ordinateur compris dans ledit système de simulation en temps réel (12), ledit logiciel de simulation en temps réel (121) étant configuré de façon à simuler en temps réel un comportement transitoire de la centrale hydroélectrique (2) en se basant sur lesdites entrées de simulation mesurées en temps réel (111) en modélisant ladite centrale hydroélectrique avec des équations différentielles ordinaires pour la composante hydraulique comprenant les machines hydrauliques, pour la composante mécanique comprenant les inerties et paramètres de couplage des machines électriques et hydrauliques et pour la composante électrique comprenant les machines électriques et de façon à fournir en temps réel des données de la centrale simulées en temps réel liées audit comportement transitoire de la centrale hydroélectrique (2),

- **en ce que** lesdites données de la centrale simulées en temps réel comprennent au moins une grandeur surveillée simulée en temps réel (123), ladite grandeur surveillée simulée en temps réel (123) correspondant à une grandeur simulée d'une grandeur non mesurée de la centrale ou d'une grandeur non mesurable de la centrale,
- et **en ce que** ledit système de diagnostic en temps réel (13) est configuré de façon à

  - comparer en temps réel ladite grandeur surveillée simulée en temps réel (123) avec un seuil prédéterminé de façon à déclencher, lorsque ladite grandeur surveillée simulée en temps réel (123) dépasse ledit seuil prédéterminé, une autre alarme identifiant un autre problème de comportement transitoire de la centrale,
  - et/ou de façon à calculer en temps réel au moins une sortie liée à ladite grandeur surveillée simulée en temps réel (123) et à comparer en temps réel ladite sortie avec un seuil prédéterminé de façon à déclencher, lorsque ladite sortie dépasse ledit seuil prédéterminé, une autre alarme identifiant un autre problème de comportement transitoire de la centrale.

9. Système de surveillance en temps réel selon la revendication précédente, **caractérisé en ce que**

   - ladite grandeur non mesurée ou ladite grandeur non mesurable de la centrale est une pression le long d'une galerie (23), d'une canalisation (25) et/ou le long d'une conduite forcée (24) et **en ce que** ledit autre problème de comportement transitoire de la centrale est respectivement un dépassement d'un seuil minimal ou maximal prédéterminé de la pression le long de ladite galerie (23), de ladite canalisation (25) et/ou le long de ladite conduite forcée (24),
   - et/ou **en ce que** ladite grandeur non mesurée ou ladite grandeur non mesurable de la centrale est un débit d'eau dans une canalisation (25) et **en ce que** ledit autre problème de comportement transitoire de la centrale est un dépassement d'un seuil maximal prédéterminé du débit d'eau dans ladite canalisation (25),
   - et/ou **en ce que** ladite grandeur non mesurée ou ladite grandeur non mesurable de la centrale est un courant et/ou une tension d'un groupe générateur (31) et/ou d'un transformateur (35) et **en ce que** ledit autre problème de comportement transitoire de la centrale est respectivement un dépassement d'un seuil maximal prédéterminé du courant et/ou de la tension dudit groupe générateur (31) et/ou dudit transformateur (35),
   - et/ou **en ce que** ladite grandeur non mesurée ou ladite grandeur non mesurable de la centrale est un couple dans un arbre (30) et **en ce que** ledit autre problème de comportement transitoire de la centrale est un dépassement d'un seuil maximal prédéterminé du couple dudit arbre (30),
   - et/ou **en ce que** ladite grandeur non mesurée ou ladite grandeur non mesurable de la centrale est un couple transmis dans les fondations (34) de la centrale (2), et **en ce que** ledit autre problème de comportement transitoire de la centrale est un dépassement d'un seuil maximal prédéterminé du couple transmis dans lesdites fondations (34).

10. Système de surveillance en temps réel selon l'une quelconque des revendications précédentes, **caractérisé**

    - **en ce que** lesdites données de la centrale mesurées en temps réel comprennent des entrées de simulation mesurées en temps réel (111) et au moins une grandeur surveillée mesurée en temps réel (112),
    - **en ce que** ledit système de surveillance en temps réel comprend un système de diagnostic en temps réel (13),
    - et **en ce que** ledit système de diagnostic en temps réel (13) est configuré de façon à

      - comparer en temps réel ladite au moins une grandeur surveillée mesurée en temps réel (112) avec un seuil prédéterminé de façon à déclencher, lorsque ladite grandeur surveillée mesurée en temps réel (112) dépasse ledit seuil prédéterminé, une autre alarme identifiant un autre problème de comportement transitoire de la centrale,
      - et/ou de façon à calculer en temps réel au moins une sortie liée à ladite grandeur surveillée mesurée en temps réel (112) et à comparer en temps réel ladite sortie avec un seuil prédéterminé de façon à déclencher, lorsque ladite sortie dépasse ledit seuil prédéterminé, une autre alarme identifiant un autre problème de comportement transitoire de la centrale.

11. Système de surveillance en temps réel selon la revendication précédente, **caractérisé en ce que**

- ladite grandeur surveillée mesurée en temps réel (112) est un niveau d'eau de réservoir d'équilibre (22) et **en ce que** ledit autre problème de comportement transitoire de la centrale est un dépassement d'un seuil minimal ou maximal prédéterminé du niveau d'eau dans ledit réservoir d'équilibre (22),
- et/ou **en ce que** ladite grandeur surveillée mesurée en temps réel (112) est une pression au fond d'une conduite forcée (24) et **en ce que** ledit autre problème de comportement transitoire de la centrale est un dépassement d'un seuil minimal ou maximal prédéterminé de la pression au fond de ladite conduite forcée (24),
- et/ou **en ce que** ladite grandeur surveillée mesurée en temps réel (112) est un courant et/ou une tension d'un rotor (32) et/ou d'un stator (33) de groupe générateur et **en ce que** ledit autre problème de comportement transitoire de la centrale est respectivement un dépassement d'un seuil maximal prédéterminé du courant et/ou de la tension dudit rotor (32) et/ou stator (33) du groupe générateur.

12. Système de surveillance en temps réel selon l'une quelconque des revendications 5 à 11, **caractérisé en ce que** lesdites entrées de simulation mesurées en temps réel (111) comprennent des conditions aux limites de la centrale de manière à ce que le système de surveillance en temps réel (12) soit synchronisé en temps réel avec les conditions aux limites de la centrale (2), lesdites conditions aux limites de la centrale comprenant au moins un des paramètres de conditions aux limites suivants :

- un paramètre hydraulique de conditions aux limites, tel qu'un niveau d'eau de réservoir (21),
- un paramètre électrique de conditions aux limites, tel qu'une tension d'un réseau d'énergie (37) et/ou une fréquence de réseau d'énergie (37),
- ou n'importe quelle combinaison de ces paramètres.

13. Système de surveillance en temps réel selon l'une quelconque des revendications 5 à 12, **caractérisé en ce que** lesdites entrées de simulation mesurées en temps réel (111) comprennent un paramètre de commande de la centrale de manière à ce que le système de surveillance en temps réel (12) soit synchronisé en temps réel avec au moins un paramètre de commande de la centrale, ledit au moins un paramètre de commande de la centrale comprenant au moins un des paramètres de commande suivants :

- un paramètre de commande hydraulique, tels qu'une ouverture d'aube directrice et/ou une ouverture de soupape et/ou un angle d'aube (28) et/ou une position d'aube de distributeur,
- un paramètre de commande électrique, tel qu'une tension du système d'excitation du groupe générateur (31) et/ou l'état du disjoncteur,
- ou n'importe quelle combinaison de ces paramètres.

14. Système de surveillance en temps réel selon l'une quelconque des revendications précédentes, **caractérisé en ce que** ledit logiciel de simulation en temps réel (121) ou ledit logiciel de simulation préventif (161 ; 161") est configuré de façon à simuler un comportement transitoire de la centrale hydroélectrique (2) en modélisant simultanément au moins une composante hydraulique, au moins une composante mécanique, au moins une composante électrique de la centrale hydroélectrique (2) et au moins une interaction entre lesdites composantes de manière à ce qu'un problème de comportement transitoire ayant sa source dans de telles interactions puisse être identifié.

15. Système de surveillance en temps réel selon l'une quelconque des revendications précédentes, **caractérisé en ce que** ladite sortie est un résultat d'analyse temps-fréquence ou un résultat d'analyse d'enveloppe de ladite grandeur surveillée simulée préventive (162 ; 162"), de ladite grandeur surveillée mesurée en temps réel (112) ou de ladite grandeur surveillée simulée en temps réel (122 ; 123).

16. Procédé de surveillance en temps réel de centrale hydroélectrique comprenant les étapes suivantes :

a) l'acquisition en temps réel, en provenance d'une centrale hydroélectrique (2), de données de la centrale mesurées en temps réel comprenant des entrées de simulation mesurées en temps réel (111 ; 111") comprenant une valeur réelle de chacun d'au moins un paramètre de commande de la centrale,
b) la simulation périodique d'un comportement transitoire virtuel de la centrale hydroélectrique (2) de ladite valeur réelle du paramètre de commande de la centrale à au moins une valeur virtuelle dudit paramètre de commande de la centrale selon au moins un débit de variation prédéterminé dudit paramètre de commande de la centrale,
c) la fourniture périodique de données simulées préventives de la centrale liées audit comportement transitoire virtuel de ladite centrale hydroélectrique (2) comprenant au moins une grandeur surveillée simulée préventive (162 ; 162"),

d) la comparaison de ladite grandeur surveillée simulée préventive (162 ; 162") avec un seuil prédéterminé de façon à déclencher, lorsque ladite grandeur surveillée simulée préventive (162; 162") dépasse ledit seuil prédéterminé, une alarme identifiant un problème de comportement transitoire de la centrale d'une manière préventive,

et/ou le calcul d'au moins une sortie liée à ladite grandeur surveillée simulée préventive (162 ; 162") et la comparaison en temps réel de ladite sortie avec un seuil prédéterminé de façon à déclencher, lorsque ladite sortie dépasse ledit seuil prédéterminé, une alarme identifiant un problème de comportement transitoire de la centrale d'une manière préventive.

17. Procédé de surveillance en temps réel selon la revendication précédente,
dans lequel, lors de l'étape a), acquisition de données de la centrale mesurées en temps réel, les données de la centrale mesurées en temps réel comprennent au moins une grandeur surveillée mesurée en temps réel (112), et ce procédé de surveillance en temps réel comprenant les étapes suivantes :

e) la simulation en temps réel d'un comportement transitoire de la centrale hydroélectrique (2) en se basant sur lesdites entrées de simulation mesurées en temps réel (111) en modélisant ladite centrale hydroélectrique avec des équations différentielles ordinaires pour la composante hydraulique comprenant les machines hydrauliques, pour la composante mécanique comprenant les inerties et paramètres de couplage des machines électriques et hydrauliques et pour la composante électrique comprenant les machines électriques,
f) la fourniture en temps réel de données de la centrale simulées en temps réel liées audit comportement transitoire de la centrale hydroélectrique (2), lesdites données de la centrale simulées en temps réel comprenant au moins une grandeur surveillée simulée en temps réel (122) correspondant à une grandeur simulée de ladite grandeur surveillée mesurée en temps réel (112),
g) la comparaison en temps réel de ladite grandeur surveillée mesurée en temps réel (112) avec ladite grandeur surveillée simulée en temps réel (122) afin de déclencher, dans le cas d'un écart au-dessus d'un seuil prédéterminé, une autre alarme identifiant un autre problème de comportement transitoire de la centrale,

et/ou le calcul en temps réel d'au moins une sortie liée à ladite grandeur surveillée mesurée en temps réel (112) et d'au moins une autre sortie liée à ladite grandeur surveillée simulée en temps réel (122) et la comparaison en temps réel de ladite sortie avec ladite autre sortie afin de déclencher, dans le cas d'un écart au-dessus du seuil prédéterminé, une autre alarme identifiant un autre problème de comportement transitoire de la centrale.

18. Procédé de surveillance en temps réel selon l'une quelconque des revendications 16 à 17,
ce procédé de surveillance en temps réel comprenant les étapes suivantes :

h) la simulation en temps réel d'un comportement transitoire de la centrale hydroélectrique (2) en se basant sur lesdites entrées de simulation mesurées en temps réel (111) en modélisant ladite centrale hydroélectrique avec des équations différentielles ordinaires pour la composante hydraulique comprenant les machines hydrauliques, pour la composante mécanique comprenant les inerties et paramètres de couplage des machines électriques et hydrauliques et pour la composante électrique comprenant les machines électriques,
i) la fourniture en temps réel de données de la centrale simulées en temps réel, lesdites données de la centrale simulées en temps réel comprenant au moins une grandeur surveillée simulée en temps réel (123) correspondant à une grandeur simulée d'une grandeur non mesurée de la centrale ou d'une grandeur non mesurable de la centrale,
j) la comparaison en temps réel de ladite grandeur surveillée simulée en temps réel (123) correspondant à une grandeur simulée d'une grandeur non mesurée de la centrale ou d'une grandeur non mesurable de la centrale avec un seuil prédéterminé de façon à déclencher, lorsque ladite grandeur surveillée simulée en temps réel (123) dépasse ledit seuil prédéterminé, une autre alarme identifiant un autre problème de comportement transitoire de la centrale,

et/ou le calcul en temps réel d'au moins une sortie liée à ladite grandeur surveillée simulée en temps réel (123) et la comparaison en temps réel de ladite sortie avec un seuil prédéterminé de façon à déclencher, lorsque ladite sortie dépasse ledit seuil prédéterminé, une autre alarme identifiant un autre problème de comportement transitoire de la centrale.

19. Procédé de surveillance en temps réel selon l'une quelconque des revendications 16 à 18,
dans lequel, lors de l'étape a), acquisition de données de la centrale mesurées en temps réel, lesdites données de la centrale mesurées en temps réel comprennent au moins une grandeur surveillée mesurée en temps réel (112), et ce procédé de surveillance en temps réel comprenant les étapes suivantes :

k) la comparaison en temps réel de ladite au moins une grandeur surveillée mesurée en temps réel (112) avec un seuil prédéterminé de façon à déclencher, lorsque ladite grandeur surveillée mesurée en temps réel (112) dépasse ledit seuil prédéterminé, une autre alarme identifiant un autre problème de comportement transitoire de la centrale,

et/ou le calcul en temps réel d'au moins une sortie liée à ladite grandeur surveillée mesurée en temps réel (112) et la comparaison en temps réel ladite sortie avec un seuil prédéterminé de façon à déclencher, lorsque ladite sortie dépasse ledit seuil prédéterminé, une autre alarme identifiant un autre problème de comportement transitoire de la centrale.

Figure 1

*hydroelectric power plant (2)*

simulation inputs

monitored quantity

*real-time monitoring system (1)*

*real-time data acquisition system (11)*

real-time measured
simulation inputs (111)

real-time measured
monitored quantity (112)

*real-time simulation system (12)*

real-time simulation software (121)

(122) = simulated quantity of
real-time measured monitored quantity (112)
(123) = simulated quantity of
non-measured quantity or of non-meassurable quantity

*preventive simulation system (16)*

preventive simulation software (161)

preventive simulated monitored quantity (162)

*real-time diagnostic system (13)*

(122)
VS
(112)    OK

NOT OK    no alarm

first alarm

(123)
VS
predetermined
threshold    OK

NOT OK    no alarm

second alarm

(112)
VS
predetermined
threshold    OK

NOT OK    no alarm

third alarm

*preventive diagnostic system (17)*

(162)
VS
predetermined
threshold    OK

NOT OK    no alarm

fourth alarm

*archival storage system (15)*

data

*secured remote access system (14)*

access, control

Figure 2

**hydroelectric power plant (2)**

simulation inputs

**real-time monitoring system (1')**

**real-time data acquisition system (11')**

real-time measured
simulation inputs (111')

**real-time simulation system (12')**

real-time simulation software (121')

(123') = simulated quantity of non-measured quantity or of non-meassurable quantity

**real-time diagnostic system (13')**

(123')
VS
predetermined
threshold

OK

NOT OK

No alarm

alarm

**archival storage system (15)**

data

**secured remote access system (14)**

access, control

Figure 3

*hydroelectric power plant (2)*

simulation inputs

*real-time monitoring system (1")*

*real-time data acquisition system (11")*

real-time measured simulation inputs (111")

*preventive simulation system (16")*

preventive simulation software (161")

preventive simulated monitored quantity (162")

*preventive diagnostic system (17")*

(162")
VS
predetermined
threshold

OK

NOT OK

No alarm

alarm

*archival storage system (15)*

data

*secured remote acess system (14)*

access, control

Figure 4

Figure 5a

Figure 5b

| Component | Hydraulic scheme | Electrical equivalent scheme | Parameters |
|---|---|---|---|
| Generalized pipe | | | $R = \dfrac{dx\lambda\,\lvert Q\rvert}{2gDA^2}$ $R_{ve} = \dfrac{\mu}{\rho\,gA\,dx}$ $L = \dfrac{dx}{gA}$ $C = \dfrac{dx\,gA}{a^2}$ |
| Valve | | | $R_v = \dfrac{K_v(\alpha)\,\lvert Q\rvert}{2gA^2}$ |
| Surge tank | | | $R_d = \dfrac{K_d(Q)\,\lvert Q\rvert}{2gA^2}$ $C_{ST} = A_{ST}(h_c)$ |
| Francis pump-turbine | | | $H = H(W_H(y,Q,N))$ $T = T(W_B(y,Q,N))$ $R_t = R_t(W_H(y,Q,N))$ $L_t = \dfrac{l_{equ}}{gA}$ |

$V_g$ : volume of gas [m³]    $W_H$ : turbine head characteristic [-]    $l_{equ}$ : turbine equivalent length [m]

$h_g$ : pressure of gas [m]    $W_B$ : turbine torque characteristic [-]    $\mu$ : viscosity of the fluid or material [Pa·s]

Figure 6

Figure 7

Figure 8

Figure 9

**EP 2 801 879 B1**

**Patent documents cited in the description**

- EP 2525087 A2